# EUROPEAN PATENT APPLICATION

(11) **EP 4 825 911 A1**
(43) Date of publication of application: **21.10.2026**
(21) Application number: 24903737.5
(22) Date of filing: 11.12.2024
(51) Int. Cl.: C08L 9/00, B60C 1/00, C08K 3/36, C08L 71/12

(54) **RUBBER COMPOSITION AND METHOD FOR USING POLYPHENYLENE ETHER**

(30) Priority: 15.12.2023 JP 2023212526
(71) Applicant: ASAHI KASEI KABUSHIKI KAISHA, Tokyo 100-0006 (JP)
(72) Inventor: ICHINO, Hiroyuki, Tokyo 100-0006 (JP); TANAKA, Yudai, Tokyo 100-0006 (JP)
(74) Representative: Strehl & Partner mbB
(86) International application number: PCT/JP2024/043903
(87) International publication number: WO 2025/127084

(57) **Abstract**

The object is to obtain a rubber composition that has excellent processability, high fuel efficiency, wet gripping performance, and ice gripping performance and that has a good balance of high levels of these characteristics. To achieve this object, a rubber composition contains a polyphenylene ether having a glass-transition temperature of not lower than -100°C and lower than 0°C as measured by differential scanning calorimetry (DSC) and a diene elastomer.

## Description

### TECHNICAL FIELD

The present disclosure relates to a rubber composition and a method of using a polyphenylene ether.

### BACKGROUND

Rubber compositions are conventionally widely used in the field of industrial components for automobile members, tire members, packings, gaskets, sealing materials, anti-vibration rubber, vibration isolation rubber, vibration dampening materials, shoe outsoles, shoe midsoles, and so forth.

In the case of a tire tread, which is one example of a tire member, there is demand for higher levels of reduction of rolling resistance (high fuel efficiency) and improvement of handling stability on wet road surfaces (wet gripping performance). However, high fuel efficiency and wet gripping performance generally have an antagonistic relationship, making it difficult to simultaneously achieve both thereof.

Moreover, in the case of a winter tire, there is also demand for handling stability at low temperature and on icy and snowy road surfaces (ice gripping performance). Since increasing the contact area between rubber forming a tire and ice or snow is effective for improving ice gripping performance, it is desirable that tire rubber has high flexibility. The method by which flexibility is imparted may be by using a softener such as a petroleum-based oil. However, the addition of an oil creates a problem of degradation over time due to the occurrence of bleed-out and reduction of ice gripping performance. For this reason, additives that are alternatives for oils have been proposed.

For example, Patent Literature (PTL) 1 discloses a rubber composition that contains a rubber component and a farnesene resin in specific proportions, and also discloses that this rubber composition has good ice gripping performance, wear resistance, and so forth and experiences little change of hardness or the like.

### CITATION LIST

### Patent Literature

PTL 1: JP 2014-218631 A

### SUMMARY

### (Technical Problem)

However, although improvement of tire gripping performance is seen in PTL 1, this improvement is still insufficient, no mention is made of high fuel efficiency, and further improvement is desirable from a viewpoint of obtaining a rubber composition having an excellent balance of characteristics.

The present disclosure was made in light of the problems described above and has an object of providing a rubber composition having a balance of high levels of processability, high fuel efficiency, wet gripping performance, and ice gripping performance.

### (Solution to Problem)

As a result of diligent studies conducted to solve the problems described above, the inventors discovered that a rubber composition that contains a polyphenylene ether having a specific glass-transition temperature can solve the problems of the conventional technique described above and thereby completed the present disclosure.

Specifically, the present disclosure is as set forth below.
[1] A rubber composition comprising:
   a polyphenylene ether (A) having a glass-transition temperature of not lower than -100°C and lower than 0°C as measured by differential scanning calorimetry (DSC); and
   a diene elastomer (B).
[2] The rubber composition according to [1], wherein
   the polyphenylene ether (A) includes a repeating unit derived from a phenol of formula (1), shown below, and a repeating unit derived from a phenol of formula (2), shown below, and
   a content ratio of the repeating unit derived from the phenol of formula (1) is not less than 31 mol% and less than 100 mol% and a content ratio of the repeating unit derived from the phenol of formula (2) is more than 0 mol% and not more than 69 mol% relative to 100 mol%, in total, of the repeating units of formula (1) and formula (2), 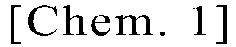 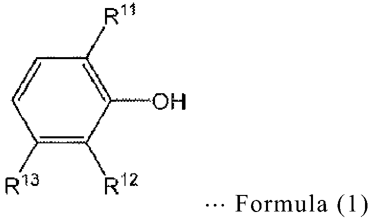 given that in formula (1), R¹³ is an optionally substituted saturated or unsaturated hydrocarbon group having a carbon number of 15, and R¹¹ and R¹² are each independently a hydrogen atom, a linear saturated hydrocarbon group having a carbon number of 1 to 12, or a substituent represented by formula (3), shown below, 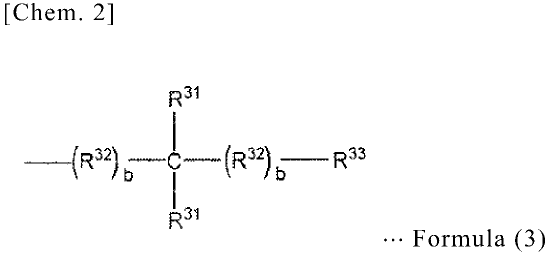 in formula (3), each R³¹ is independently an optionally substituted linear alkyl group having a carbon number of 1 to 8, or atoms in two R³¹ groups are bonded to each other to form a cycloalkyl group having a carbon number of 1 to 8, each R³² is independently an optionally substituted alkylene group having a carbon number of 1 to 8, each b is independently 0 or 1, and R³³ is a hydrogen atom, an optionally substituted alkyl group having a carbon number of 1 to 8, or an optionally substituted phenyl group, 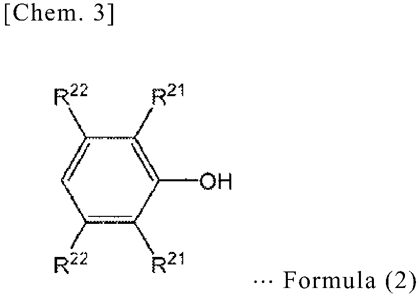 and in formula (2), each R²¹ is independently an optionally substituted saturated hydrocarbon group having a carbon number of 1 to 6, an optionally substituted aryl group having a carbon number of 6 to 12, or a halogen atom, and each R²² is independently a hydrogen atom, an optionally substituted hydrocarbon group having a carbon number of 1 to 6, an optionally substituted aryl group having a carbon number of 6 to 12, or a halogen atom.
[3] The rubber composition according to [1] or [2], wherein the polyphenylene ether (A) has a viscosity at 80°C of less than 1,000,000 cP.
[4] The rubber composition according to any one of [1] to [3], wherein the polyphenylene ether (A) has a number-average molecular weight of less than 5,500.
[5] The rubber composition according to any one of [1] to [4], wherein the polyphenylene ether (A) includes a biomass-derived monomer.
[6] The rubber composition according to any one of [1] to [5], wherein the biomass-derived monomer is CNSL.
[7] The rubber composition according to any one of [1] to [6], wherein the rubber composition comprises 0.01 parts by mass to 65 parts by mass of the polyphenylene ether (A) relative to 100 parts by mass of the diene elastomer (B).
[8] The rubber composition according to any one of [1] to [7], wherein the rubber composition comprises 10 parts by mass to 115 parts by mass of silica relative to 100 parts by mass of the diene elastomer (B).
[9] A method of using a polyphenylene ether comprising using a polyphenylene ether having a glass-transition temperature of not lower than -100°C and lower than 0°C as measured by differential scanning calorimetry (DSC) as a raw material of a composition for a tire.
[10] A method of producing vulcanized rubber comprising:
   a step of mixing a diene elastomer (B) and a polyphenylene ether (A) having a glass-transition temperature of not lower than -100°C and lower than 0°C as measured by differential scanning calorimetry (DSC) to obtain a rubber composition; and
   a step of vulcanizing the rubber composition, wherein
   the polyphenylene ether (A) has an unsaturated hydrocarbon group in a side chain, and
   the diene elastomer (B) and the polyphenylene ether (A) undergo a crosslinking reaction.

### (Advantageous Effect)

According to the present disclosure, it is possible to obtain a rubber composition having a balance of high levels of processability, high fuel efficiency, wet gripping performance, and ice gripping performance.

Moreover, according to the present disclosure, it is possible to provide a novel method of using a polyphenylene ether.

### DETAILED DESCRIPTION

The following provides a detailed description of an embodiment of the present disclosure (hereinafter, referred to as the "present embodiment").

The present embodiment described below is an example for describing the present disclosure. The present disclosure is not limited to just the present embodiment and can be implemented with appropriate modifications that do not deviate from the essence thereof.

### <Rubber composition>

A rubber composition of the present embodiment contains a polyphenylene ether (A) and a diene elastomer (B).

### ((A) Polyphenylene ether)

The rubber composition of the present embodiment contains a polyphenylene ether. This polyphenylene ether is a polyphenylene ether having a glass-transition temperature according to DSC of not lower than -100°C and lower than 0°C.

The glass-transition temperature according to DSC of the polyphenylene ether is required to be -100°C or higher, and is preferably -80°C or higher, and more preferably -50°C or higher. When the glass-transition temperature according to DSC of the polyphenylene ether is -100°C or higher, this results in a good balance of high levels of the above-described characteristics in the obtained rubber composition.

Moreover, the glass-transition temperature according to DSC of the polyphenylene ether is required to be lower than 0°C, and is preferably lower than -5°C, and more preferably lower than -10°C. When the glass-transition temperature of the polyphenylene ether is lower than 0°C, wet gripping performance and ice gripping performance of the obtained rubber composition are excellent.

It is presumed that when the glass-transition temperature of the polyphenylene ether is within any of the ranges set forth above, compatibility with the diene elastomer increases, and the above-described effects of the obtained rubber composition are exhibited.

The compatibility of the polyphenylene ether and the diene elastomer is estimated from the magnitude of tan δ of the rubber composition of the present embodiment. When compatibility is good, the magnitude of tan δ of the rubber composition of the present embodiment is not significantly reduced compared to the magnitude of tan δ of a rubber composition in which the polyphenylene ether has not been added.

One type of the polyphenylene ether (A) may be used individually, or two or more types of the polyphenylene ether (A) may be used together.

Note that the method by which the glass-transition temperature according to DSC is adjusted may, for example, be by lowering the glass-transition temperature through molecular design that weakens interactions between polymer chains and facilitates movement of the polymer chains. Although no specific limitations are made, the glass-transition temperature can be lowered by, for example, introducing a repeating unit having a long chain alkyl group into the polyphenylene ether. Moreover, the glass-transition temperature according to DSC can be adjusted through appropriate adjustment of the introduction rate of the repeating unit having a long chain alkyl group and the chain length of the long chain alkyl group.

A commercially available measurement instrument can be used without any specific limitations as the measurement instrument for measurement by differential scanning calorimetry. For example, a DSC250 produced by TA Instruments can be used as a differential scanning calorimetry measurement instrument.

The polyphenylene ether (A) preferably includes a repeating unit derived from a phenol of the following formula (1) from a viewpoint of improving vulcanization reactivity with the rubber composition. A polyphenylene ether that includes a repeating unit derived from a phenol of formula (1) has high reactivity since a plurality of reaction sites of the polyphenylene ether are present on side chains protruding out from a main chain of a molecule and because there is little steric hinderance and high frequency of collisions between molecules. Improvement of vulcanization reactivity can increase the vulcanization rate and also improves vulcanization adhesion during retreading and tends to result in excellent high fuel efficiency, wet gripping performance, ice gripping performance, tensile strength, and tensile elongation of the rubber composition. 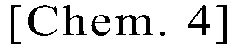 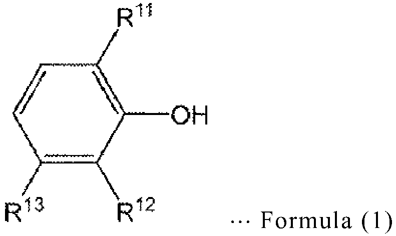 In formula (1), R¹³ is an optionally substituted saturated or unsaturated hydrocarbon group having a carbon number of 15, and R¹¹ and R¹² are each independently at least one selected from the group consisting of a hydrogen atom, a linear saturated hydrocarbon group having a carbon number of 1 to 12, and a substituent represented by formula (3).

It is preferable that R¹¹ and R¹² are each independently at least one selected from a hydrogen atom, a methyl group, an ethyl group, and a substituent represented by formula (3). It is more preferable that R¹¹ is a substituent represented by formula (3). It is particularly preferable that R¹¹ is a substituent represented by formula (3) and R¹² is a hydrogen atom. 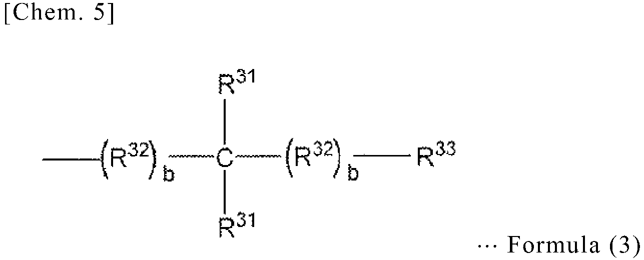 (In formula (3), each R³¹ is independently an optionally substituted linear alkyl group having a carbon number of 1 to 8, or atoms in two R³¹ groups are bonded to each other to form a cycloalkyl group having a carbon number of 1 to 8, each R³² is independently an optionally substituted alkylene group having a carbon number of 1 to 8, each b is independently 0 or 1, and R³³ is a hydrogen atom, an optionally substituted alkyl group having a carbon number of 1 to 8, or an optionally substituted phenyl group.)

The substituent represented by formula (3) is preferably a group including a secondary and/or tertiary carbon, examples of which include an isopropyl group, an isobutyl group, a sec-butyl group, a tert-butyl group, a tert-amyl group, a 2,2-dimethylpropyl group, a cyclohexyl group, and a group in which a terminal hydrocarbon group hydrogen in any of these groups has been replaced by a phenyl group. The substituent represented by formula (3) is more preferably a tert-butyl group or a cyclohexyl group, and even more preferably a tert-butyl group. Moreover, atoms included in any of these groups may be bonded to form a cyclic structure.

In the rubber composition of the present embodiment, a configuration in which R¹¹ is a t-butyl group and R¹² is a hydrogen atom in the previously described formula (1) is preferable.

Note that in formula (1), R¹³ is an optionally substituted saturated or unsaturated hydrocarbon group having a carbon number of 15 and is preferably represented by C₁₅H₃₁₋₂ₙ (each n is independently an integer of 0 to 3).

The polyphenylene ether may include a repeating unit derived from a phenol of formula (2) in addition to a repeating unit derived from a phenol of formula (1) from a viewpoint of heat resistance of the obtained rubber composition. 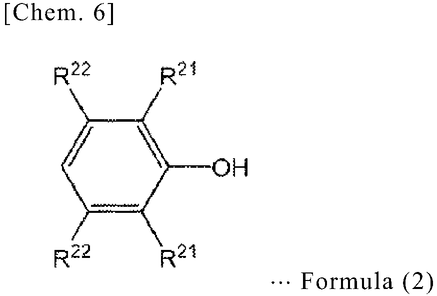 (In formula (2), each R²¹ is independently an optionally substituted saturated hydrocarbon group having a carbon number of 1 to 6, an optionally substituted aryl group having a carbon number of 6 to 12, or a halogen atom, and each R²² is independently a hydrogen atom, an optionally substituted hydrocarbon group having a carbon number of 1 to 6, an optionally substituted aryl group having a carbon number of 6 to 12, or a halogen atom.)

In formula (2), each R²¹ is independently preferably a saturated hydrocarbon group having a carbon number of 1 to 6 or an aryl group having a carbon number of 6 to 12, more preferably a methyl group or a phenyl group, and even more preferably a methyl group. Moreover, the two R²¹ groups in formula (2) are preferably both the same structure.

Each R²² in formula (2) is independently preferably a hydrogen atom or a hydrocarbon group having a carbon number of 1 to 6, and more preferably a hydrogen atom or a methyl group. The two R²² groups in formula (2) may be the same or different.

Examples of preferred configurations include a configuration in which the two R²² groups are each a hydrogen atom and a configuration in which one R²² is a hydrogen atom and the other R²² is a hydrocarbon group having a carbon number of 1 to 6 (more preferably a methyl group).

Note that in the present embodiment, the structure of the polyphenylene ether can be identified through analysis by a technique such as NMR or mass spectrometry.

As one example of a specific method for identifying the structure of the polyphenylene ether, field desorption mass spectrometry (FD-MS), which is known to have a low tendency to cause fragmentation, is performed, and repeating units can be deduced from intervals between detected ions. Another example is a method in which the structure of the polyphenylene ether is deduced through combination with peak analysis of fragment ions by electron ionization (EI) or structural analysis by NMR. Moreover, the structure can be determined using an analysis technique such as ¹H NMR.

The polyphenylene ether (A) preferably has a content ratio of repeating units derived from a phenol of formula (1) of not less than 31 mol% and not more than 100 mol% and a content ratio of repeating units derived from a phenol of formula (2) of more than 0 mol% and not more than 69 mol% relative to 100 mol%, in total, of repeating units derived from a phenol of formula (1) and repeating units derived from a phenol of formula (2).

Moreover, from a viewpoint of increasing processability, high fuel efficiency, wet gripping performance, and ice gripping performance of the obtained rubber composition while also balancing these characteristics, the content ratio of repeating units derived from a phenol of formula (1) is preferably 40 mol% or more, more preferably 50 mol% or more, and even more preferably 60 mol% or more relative to 100 mol%, in total, of repeating units derived from a phenol of formula (1) and repeating units derived from a phenol of formula (2). On the other hand, no limitations are placed on the upper limit for the content ratio of formula (1).

The content of repeating units derived from a phenol of formula (2) can be selected as appropriate according to the application. For example, the content of repeating units derived from a phenol of formula (2) is preferably high when the aim is to improve heat resistance.

A total molar ratio of repeating units derived from a phenol of formula (1) and repeating units derived from a phenol of formula (2) relative to 100 mol% of the polyphenylene ether of the present embodiment is preferably 80 mol% or more, more preferably 90 mol% or more, and even more preferably 95 mol% or more, and may be 100 mol%.

The molar ratio of repeating units derived from a phenol of formula (1) and the molar ratio of repeating units derived from a phenol of formula (2) relative to 100 mol%, in total, of repeating units derived from a phenol of formula (1) and repeating units derived from a phenol of formula (2) can be determined by an analysis technique such as ¹H-NMR or ¹³C-NMR, for example, and can more specifically be measured by a method subsequently described in the EXAMPLES section.

The polyphenylene ether (A) may include a repeating unit derived from a phenol of the following formula (4). In this case, wet gripping performance and ice gripping performance can be further improved because Tg of the rubber composition can be lowered.

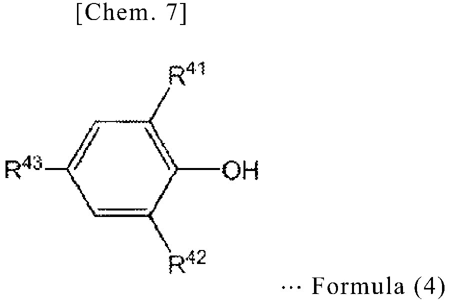

In formula (4), R⁴¹, R⁴², and R⁴³ are each independently a linear saturated hydrocarbon group having a carbon number of 1 to 12 or an optionally substituted organic group having a carbon number of 7 to 25 that includes at least one atom selected from the group consisting of a nitrogen atom, an oxygen atom, and a sulfur atom, and at least one of R⁴¹, R⁴², and R⁴³ is an organic group having a carbon number of 7 to 25 that includes at least one atom selected from the group consisting of a nitrogen atom, an oxygen atom, and a sulfur atom.

Moreover, in formula (4), at least one of R⁴¹, R⁴², and R⁴³ is preferably an organic group having a carbon number of 8 to 20 that includes a sulfur atom, and more preferably an organic group having a carbon number of 9 to 15 that includes a sulfur atom.

More specifically, 4,6-bis(octylthiomethyl)-o-cresol and 4,6-bis(dodecylthiomethyl)-o-cresol are preferable as phenols of formula (4).

The polyphenylene ether of the present embodiment may include a repeating unit derived from a phenol of formula (2) in addition to a repeating unit derived from a phenol of formula (4).

The polyphenylene ether of the present embodiment preferably has a content ratio of repeating units derived from a phenol of formula (4) of 7 mol% to 50 mol% and a content ratio of repeating units derived from a phenol of formula (2) of 50 mol% to 93 mol% relative to 100 mol%, in total, of repeating units derived from a phenol of formula (4) and repeating units derived from a phenol of formula (2).

From a viewpoint of processability of the obtained rubber composition, the content ratio of repeating units derived from a phenol of formula (4) is preferably 7 mol% or more, more preferably 10 mol% or more, and even more preferably 15 mol% or more relative to 100 mol%, in total, of repeating units derived from a phenol of formula (4) and repeating units derived from a phenol of formula (2).

Moreover, from a viewpoint of high fuel efficiency, wet gripping performance, and ice gripping performance of the obtained rubber composition, the content ratio of repeating units derived from a phenol of formula (4) is preferably 50 mol% or less, more preferably 30 mol% or less, and even more preferably 20 mol% or less relative to 100 mol%, in total, of repeating units derived from a phenol of formula (4) and repeating units derived from a phenol of formula (2).

A total molar ratio of repeating units derived from a phenol of formula (4) and repeating units derived from a phenol of formula (2) relative to 100 mol% of the polyphenylene ether of the present embodiment is preferably 80 mol% or more, more preferably 90 mol% or more, and even more preferably 95 mol% or more, and may be 100 mol%.

The polyphenylene ether of the present embodiment may include at least one substructure selected from the group consisting of a substructure of the following formula (10), a substructure of the following formula (11), a substructure of the following formula (12), and a substructure of the following formula (13). 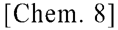 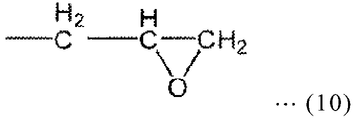 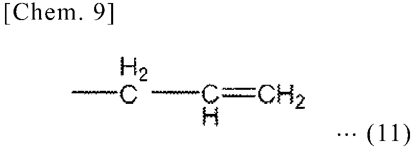 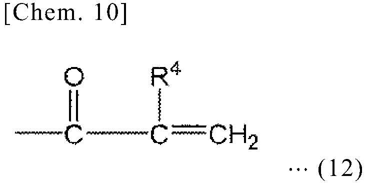 (In formula (12), R⁴ is a hydrogen atom or a saturated or unsaturated hydrocarbon group having a carbon number of 1 to 10, where the saturated or unsaturated hydrocarbon group is optionally substituted so long as the total carbon number of R⁴ is 1 to 10.) 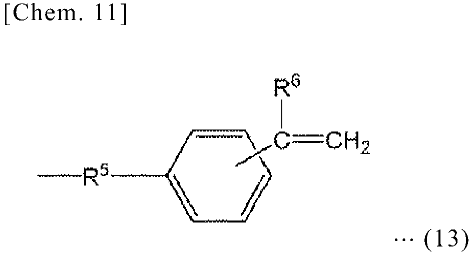 (In formula (13), R⁵ is a saturated or unsaturated divalent hydrocarbon group having a carbon number of 1 to 10, where the saturated or unsaturated divalent hydrocarbon group is optionally substituted so long as the total carbon number of R⁵ is 1 to 10, and R⁶ is a hydrogen atom or a saturated or unsaturated hydrocarbon group having a carbon number of 1 to 10, where the saturated or unsaturated hydrocarbon group is optionally substituted so long as the total carbon number of R⁶ is 1 to 10.)

Note that at least one substructure selected from the group consisting of a substructure of formula (10), a substructure of formula (11), a substructure of formula (12), and a substructure of formula (13) may be introduced through a subsequently described modification step or may be directly bonded to an oxygen atom of a hydroxy group included in the polyphenylene ether.

### (Viscosity)

The viscosity at 80°C of the polyphenylene ether (A) is preferably less than 1,000,000 cP, more preferably less than 500,000 cP, and even more preferably less than 300,000 cP from a viewpoint of processability of the obtained rubber composition.

Adjustment of the viscosity to within any of the ranges set forth above enables melting of the polyphenylene ether during kneading in production of the rubber composition, can improve compatibility with a subsequently described filler that is contained in the rubber composition, and also tends to result in excellent high fuel efficiency, wet gripping performance, ice gripping performance, tensile strength, and tensile elongation of the rubber composition. No specific limitations are placed on the means by which the viscosity is adjusted. For example, the viscosity can be adjusted through the molecular weight of the polyphenylene ether (A) or the content ratios of repeating units in the polyphenylene ether (A).

### (Molecular weight)

The number-average molecular weight (Mn) of the polyphenylene ether (A) is preferably less than 5,500, more preferably less than 5,000, and even more preferably less than 4,500 from a viewpoint of processability of the obtained rubber composition.

By melting the polyphenylene ether during kneading in production of the rubber composition, it is possible to improve compatibility with a subsequently described filler that is contained in the rubber composition, and this also tends to result in excellent high fuel efficiency, wet gripping performance, ice gripping performance, tensile strength, and tensile elongation of the rubber composition.

### (Reduced viscosity)

The reduced viscosity (ηsp/c) of the polyphenylene ether (A) as measured using a chloroform solution of 0.5 g/dL in concentration at 30°C using an Ubbelohde viscometer is preferably 0.03 dL/g to 0.90 dL/g, and more preferably 0.05 dL/g to 0.60 dL/g from a viewpoint of processability of the obtained rubber composition.

By melting the polyphenylene ether during kneading in production of the rubber composition, it is possible to improve compatibility with a subsequently described filler that is contained in the rubber composition, and this also tends to result in excellent high fuel efficiency, wet gripping performance, ice gripping performance, tensile strength, and tensile elongation of the rubber composition.

### (Production method of polyphenylene ether)

The polyphenylene ether (A) of the present embodiment can be obtained, for example, by a method including at least a step of performing oxidative polymerization of a monovalent raw material phenol including a phenol of formula (1). Moreover, the step of performing oxidative polymerization is preferably a step of performing oxidative polymerization of a raw material phenol including a phenol of formula (1) and a phenol of formula (2).

The phenol of formula (1) may be 3-pentadecylphenol, commercially available cardanol, modified 3-pentadecylphenol where a linear saturated hydrocarbon group having a carbon number of 1 to 12 or a substituent represented by formula (3) has been introduced into 3-pentadecylphenol, modified cardanol where a linear saturated hydrocarbon group having a carbon number of 1 to 12 or a substituent represented by formula (3) has been introduced into commercially available cardanol, or the like. The substituent that is introduced into the 3-pentadecylphenol or the commercially available cardanol is preferably a substituent that introduces a tert-butyl group or cyclohexyl group, which is a bulky substituent, at R¹¹ or that introduces a methyl group at both R¹¹ and R¹² from a viewpoint of inhibiting hyperbranching and inhibiting gelation. The method by which a substituent is introduced at R¹¹ or R¹² may be: A) a method of reacting an alkyl halide in the presence of a Lewis acid; or B) a method of reacting isobutene or the like in the presence of a Bronsted acid.

One phenol of formula (1) may be used individually, or a plurality of phenols of formula (1) may be used in combination.

The phenol of formula (2) may be 2,6-dimethylphenol, 2-methyl-6-ethylphenol, 2,6-diethylphenol, 2-ethyl-6-n-propylphenol, 2-methyl-6-chlorophenol, 2-methyl-6-bromophenol, 2-methyl-6-n-propylphenol, 2-ethyl-6-bromophenol, 2-methyl-6-n-butylphenol, 2,6-di-n-propylphenol, 2-ethyl-6-chlorophenol, 2-methyl-6-phenylphenol, 2,6-diphenylphenol, 2-methyl-6-tolylphenol, 2,6-ditolylphenol, 2,3,6-trimethylphenol, 2,3-diethyl-6-n-propylphenol, 2,3,6-tributylphenol, 2,6-di-n-butyl-3-methylphenol, 2,6-dimethyl-3-n-butylphenol, 2,6-dimethyl-3-t-butylphenol, or the like, for example. Of these phenols, 2,6-dimethylphenol, 2,3,6-trimethylphenol, and 2,6-diphenylphenol are preferable, in particular, due to being cheap and easily acquired.

One phenol of formula (2) may be used individually, or a plurality of phenols of formula (2) may be used in combination.

The polyphenylene ether (A) can alternatively be obtained by, for example, a method including at least a step of performing oxidative polymerization of a monovalent raw material phenol including a phenol of formula (4). The step of performing oxidative polymerization is preferably a step of performing oxidative polymerization of a raw material phenol including a phenol of formula (4) and a phenol of formula (2).

Examples of commercially available products that are preferable as phenols of formula (4) include 4,6-bis(octylthiomethyl)-o-cresol and 4,6-bis(dodecylthiomethyl)-o-cresol.

### (Biomass, CNSL)

The polyphenylene ether preferably includes a biomass-derived monomer from a viewpoint of reducing the environmental impact of the obtained rubber composition. By using a biomass-derived raw material as even just a portion of the rubber composition, it is possible reduce the used amount of fossil fuels as compared to that conventionally used.

The level of biomass in the polyphenylene ether can be determined as a value obtained by measuring the content of biomass-derived carbon through radiocarbon (C14) measurement. It is known that since carbon dioxide in the atmosphere contains C14 in a certain proportion (105.5 pMC), a plant such as corn, for example, that takes in carbon dioxide from the atmosphere and grows also has a C14 content of approximately 105.5 pMC. It is also known that fossil fuels contain almost no C14. Consequently, the proportion of biomass-derived carbon can be calculated by measuring the proportion of C14 included among all carbon atoms in the polyphenylene ether.

The term "biomass" used above refers to living matter, and, in particular, refers to plant matter such as wood, bamboo, coconuts, and cashew nut shells, polysaccharides such as cellulose, starch, and pullulan, simple sugars such as dextrin, sucrose, and maltose, monosaccharides such as fructose and glucose, and plant components such as lignin and hemicellulose. Biomass also encompasses various lignocellulosic materials such as wood-based waste from the timber and pulp industries, thinned timber, construction demolition waste, and agricultural waste such as rice straw, bean hulls, and bagasse, and also resource rice, old rice, food industry waste, and so forth. These substances are collectively referred to as biomass in present specification unless otherwise specified.

One example of a biomass-derived phenolic compound is cardanol obtained from cashew nut shell liquid (CNSL).

Cashew trees are naturally existing tropical plants, and cashew nuts, which are the fruit of cashew trees, contain protein, sugar, etc. and are used as a food in snacks such as mixed nuts and also in cooking. Cashew nuts are a natural fruit, and when these nuts are taken to be a resource, they constitute a renewable biomass resource.

CNSL is an oil-like liquid having cardanol as a main component that is contained in the shells of cashew nuts, which are an inedible portion obtained as a by-product when the fruit of natural cashew nuts used as a food is collected.

Natural CNSL is a mixture of anacardic acid, cardanol, cardol, and 2-methylcardol. Each of these components is an organic compound that is composed of a phenol moiety and a linear hydrocarbon moiety R as illustrated in the following formulae (2) to (5).

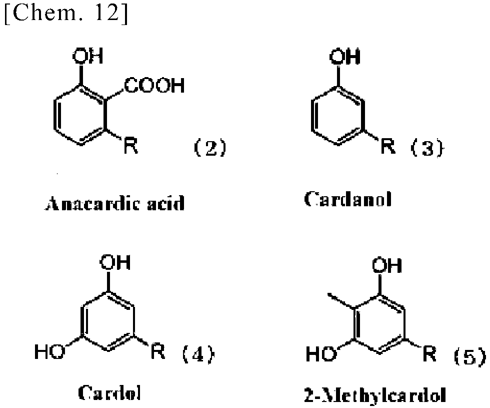

The linear hydrocarbon moiety R of each component has any of the structures indicated below. In other words, there are four types in which the numbers of unsaturated bonds are 0, 1, 2, and 3, and, on average, there are two double bonds.

R: -(CH₂)₁₄CH₃

-(CH₂)₇CH=CH(CH₂)₅CH₃

-(CH₂)₇CH=CHCH₂CH=CH(CH₂)₂CH₃

-(CH₂)₇CH=CHCH₂CH=CHCH₂CH=CH₂

Each of the compounds indicated by formulae (2) to (5) may be composed of one type of compound or may be composed of two or more types of compounds that differ in terms of R.

In natural CNSL, the main component is anacardic acid indicated by formula (2). Such natural CNSL is subjected to decarboxylation treatment for industrial use, thereby resulting in cardanol indicated by formula (3) becoming the main component. The proportions of components contained in CNSL for industry vary depending on the place of origin, etc., but are roughly 70 mass% to 80 mass% of cardanol (3), 15 mass% to 25 mass% of cardol (4), and 5 mass% or less of 2-methylcardol (5). The proportion of cardanol can be increased through distillation of CNSL for industry.

Moreover, CNSL used as a raw material for phenol production in the present embodiment may be a product resulting from unsaturated bonds of the linear hydrocarbon moiety R that is in a side chain of each of the components indicated by formulae (2) to (5) being hydrogenated in advance or may be a product resulting from chemical modification.

In the production method of the polyphenylene ether (A), an aromatic solvent that is a good solvent for the polyphenylene ether can be used as a polymerization solvent in the oxidative polymerization step.

A good solvent for the polyphenylene ether referred to here means a solvent in which the polyphenylene ether can dissolve, and examples of such solvents include aromatic hydrocarbons such as benzene, toluene, xylene (including o-, m-, and p-isomers), and ethylbenzene; halogenated hydrocarbons such as chlorobenzene and dichlorobenzene; and nitro compounds such as nitrobenzene.

Commonly known catalyst systems that can typically be used in production of polyphenylene ethers can be adopted as the polymerization catalyst that is used in the present embodiment. An example of a generally known catalyst system is a catalyst system composed of a transition metal ion having redox capability and an amine compound capable of forming a complex with the transition metal ion, and examples thereof include a catalyst system composed of a copper compound and an amine compound, a catalyst system composed of a manganese compound and an amine compound, and a catalyst system composed of a cobalt compound and an amine compound. A small amount of an alkali or an additional amine compound may be added to the system because the polymerization reaction proceeds efficiently under slightly alkaline conditions.

The polymerization catalyst used in the present embodiment is preferably a catalyst having a copper compound, a halogen compound, and an amine compound as constituent components of the catalyst, and is more preferably a catalyst including a diamine compound represented by the following formula (14) as the amine compound. 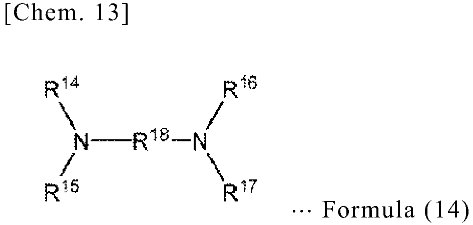 (In formula (14), R¹⁴, R¹⁵, R¹⁶, and R¹⁷ are each independently a hydrogen atom or a linear or branched alkyl group having a carbon number of 1 to 6, but are not all simultaneously hydrogen atoms. R¹⁸ is a linear or methyl-branched alkylene group having a carbon number of 2 to 5.)

The following lists examples of the copper compound as a component of the catalyst described here. The preferred copper compound may be a cuprous compound, a cupric compound, or a mixture thereof. Examples of the cupric compound include cupric chloride, cupric bromide, cupric sulfate, and cupric nitrate. Moreover, examples of the cuprous compound include cuprous chloride, cuprous bromide, and cuprous sulfate. Particularly preferable metal compounds among these examples are cuprous chloride, cupric chloride, cuprous bromide, and cupric bromide. Moreover, these copper salts may be synthesized at the time of use from an oxide (for example, cuprous oxide), a carbonate, a hydroxide, or the like and a corresponding halogen or acid. A frequently used method involves production through mixing of cuprous oxide given as an example above and a hydrogen halide (or solution of a hydrogen halide).

Examples of the halogen compound include hydrogen chloride, hydrogen bromide, hydrogen iodide, sodium chloride, sodium bromide, sodium iodide, potassium chloride, potassium bromide, potassium iodide, tetramethylammonium chloride, tetramethylammonium bromide, tetramethylammonium iodide, tetraethylammonium chloride, tetraethylammonium bromide, and tetraethylammonium iodide. These halogen compounds can be used in the form of an aqueous solution or in the form of a solution with an appropriate solvent. These halogen compounds may be used individually, or two or more of these halogen compounds may be used in combination as the component. Preferred halogen compounds are an aqueous solution of hydrogen chloride and an aqueous solution of hydrogen bromide.

Although no specific limitations are placed on the used amount of these compounds, the amount of halogen atoms is preferably within a range of not less than 2 times and not more than 20 times the number of moles of copper atoms, more preferably within a range of 2 to 15 times the number of moles of copper atoms, and even more preferably within a range of 2 to 10 times the number of moles of copper atoms.

The preferred amount of copper atoms used relative to 100 mol of phenolic compound added in the polymerization reaction is preferably within a range of 0.02 mol to 0.6 mol, more preferably within a range of 0.02 mol to 0.5 mol, and even more preferably within a range of 0.02 mol to 0.4 mol.

Next, examples of the diamine compound as a component of the catalyst are listed. Examples include N,N,N',N'-tetramethylethylenediamine, N,N,N'-trimethylethylenediamine, N,N'-dimethylethylenediamine, N,N-dimethylethylenediamine, N-methylethylenediamine, N,N,N',N'-tetraethylethylenediamine, N,N,N'-triethylethylenediamine, N,N'-diethylethylenediamine, N,N-diethylethylenediamine, N-ethylethylenediamine, N,N-dimethyl-N'-ethylethylenediamine, N,N'-dimethyl-N-ethylethylenediamine, N-n-propylethylenediamine, N,N'-n-propylethylenediamine, N-i-propylethylenediamine, N,N'-i-propylethylenediamine, N-n-butylethylenediamine, N,N'-n-butylethylenediamine, N-i-butylethylenediamine, N,N'-i-butylethylenediamine, N-t-butylethylenediamine, N,N'-t-butylethylenediamine, N,N,N',N'-tetramethyl-1,3-diaminopropane, N,N,N'-trimethyl-1,3-diaminopropane, N,N'-dimethyl-1,3-diaminopropane, N-methyl-1,3-diaminopropane, N,N,N',N'-tetramethyl-1,3-diamino-1-methylpropane, N,N,N',N'-tetramethyl-1,3-diamino-2-methylpropane, N,N,N',N'-tetramethyl-1,4-diaminobutane, and N,N,N',N'-tetramethyl-1,5-diaminopentane. Diamine compounds that are preferable in the present embodiment are those in which the carbon number of the alkylene group linking the two nitrogen atoms is 2 or 3. Although no specific limitations are placed on the used amount of these diamine compounds, the amount is preferably within a range of 0.01 mol to 10 mol, more preferably within a range of 0.01 mol to 8.0 mol, and even more preferably within a range of 0.01 mol to 6 mol relative to 100 mol of phenolic compound added in the polymerization reaction.

In the present embodiment, a primary amine and a secondary monoamine can be included as constituent components of the polymerization catalyst. Examples of the secondary monoamine include, but are not limited to, dimethylamine, diethylamine, di-n-propylamine, di-i-propylamine, di-n-butylamine, di-i-butylamine, di-t-butylamine, dipentylamines, dihexylamines, dioctylamines, didecylamines, dibenzylamines, methylethylamine, methylpropylamine, methylbutylamine, cyclohexylamine, N-phenylmethanolamine, N-phenylethanolamine, N-phenylpropanolamine, N-(m-methylphenyl)ethanolamine, N-(p-methylphenyl)ethanolamine, N-(2',6'-dimethylphenyl)ethanolamine, N-(p-chlorophenyl)ethanolamine, N-ethylaniline, N-butylaniline, N-methyl-2-methylaniline, N-methyl-2,6-dimethylaniline, and diphenylamine.

Moreover, a tertiary monoamine compound can be included as a constituent component of the polymerization catalyst. The term "tertiary monoamine compound" refers to aliphatic tertiary amines, inclusive of alicyclic tertiary amines. Examples include trimethylamine, triethylamine, tripropylamine, tributylamine, triisobutylamine, dimethylethylamine, dimethylpropylamine, allyldiethylamine, dimethyl-n-butylamine, diethylisopropylamine, and N-methylcyclohexylamine. These tertiary monoamines may be used individually, or two or more of these tertiary monoamines may be used in combination. Although no specific limitations are placed on the used amount thereof, the amount is preferably within a range of 15 mol or less, more preferably within a range of 14 mol or less, and even more preferably within a range of 13 mol or less relative to 100 mol of phenolic compound added in the polymerization reaction.

In the present embodiment, no limitations are placed on the addition of a surfactant that is conventionally known to have an effect of improving polymerization activity. Examples of such surfactants include trioctylmethylammonium chloride, which is also known by the product names Aliquat 336 and Capriquat. The used amount thereof is preferably within a range not exceeding 0.1 mass% relative to 100 mass% of the total amount of the polymerization reaction mixture.

Examples of the oxygen-containing gas in polymerization in the present embodiment include not only pure oxygen, but also mixtures of oxygen with an inert gas such as nitrogen in any ratio, air, and mixtures of air with an inert gas such as nitrogen in any ratio. Although it is adequate for the internal pressure of the system in the polymerization reaction to be normal pressure, reduced pressure or increased pressure can be adopted as necessary.

The polymerization temperature is not specifically limited but may be 0°C to 60°C, and preferably 10°C to 40°C because the reaction does not easily proceed with a temperature that is too low, whereas reduction of reaction selectivity and formation of gel may arise with a temperature that is too high.

In the production method of the polyphenylene ether (A), polymerization can also be performed in a poor solvent such as an alcohol.

In the present embodiment, no specific limitations are placed on the method of post-treatment after completion of the polymerization reaction. Typically, an acid such as hydrochloric acid or acetic acid, ethylenediaminetetraacetic acid (EDTA) or a salt thereof, nitrilotriacetic acid or a salt thereof, or the like is added to the reaction liquid to deactivate the catalyst. Moreover, a dihydric phenol by-product produced in polymerization of the polyphenylene ether can also be removed by a conventional known method. In a case in which metal ions serving as the catalyst have been substantially deactivated as described above, the mixture is decolorized simply by heating. A method in which a necessary amount of a known reductant is added can also be adopted. The known reductant may be hydroquinone, sodium dithionite, or the like.

In the production method of the polyphenylene ether (A), water may be added in order to extract the compound that has deactivated the copper catalyst, liquid-liquid separation of the organic phase and the aqueous phase may be performed, and then the aqueous phase may be removed so as to remove the copper catalyst from the organic phase. This liquid-liquid separation step may be performed by a method such as settled separation or separation by a centrifuge without any specific limitations. A commonly known surfactant or the like may be used in order to promote the liquid-liquid separation.

Next, in the production method of the polyphenylene ether (A), the organic phase containing the polyphenylene ether after the liquid-liquid separation may be concentrated and dried through vaporization of the solvent.

The method by which the solvent contained in the organic phase is vaporized may be a method in which the organic phase is transferred to a high-temperature concentrating tank to distil off the solvent and cause concentrating, a method in which toluene is distilled using an apparatus such as a rotary evaporator to cause concentrating, or the like without any specific limitations. From a viewpoint of inhibiting thermal degradation caused by heating, low-temperature concentrating under reduced pressure is more preferable.

The temperature of drying treatment in the drying step is preferably at least 60°C or higher, more preferably 80°C or higher, and even more preferably 110°C or higher. By performing drying of the polyphenylene ether at a temperature of 60°C or higher, the content of high boiling point volatile components in polyphenylene ether powder can be efficiently reduced. From a viewpoint of preventing degradation caused by heat, the temperature is preferably 200°C or lower, more preferably 180°C or lower, and even more preferably 160°C or lower.

A method of raising the drying temperature, a method of increasing the degree of vacuum in the drying atmosphere, a method of performing stirring during drying, and so forth are effective for obtaining the polyphenylene ether with high efficiency, but the method of raising the drying temperature, in particular, is preferable from a viewpoint of production efficiency. The drying step is preferably performed using a dryer with a mixing function. The mixing function may be that of a stirring-type dryer, a rolling-type dryer, or the like. This can increase throughput and also enables maintenance of high productivity.

### (Residual solvent)

The total amount of solvent remaining in the polyphenylene ether (A) is preferably less than 1 mass%, more preferably less than 0.6 mass%, even more preferably less than 0.5 mass%, particularly preferably less than 0.3 mass%, and especially preferably less than 0.1 mass% of the amount of the overall polyphenylene ether (A) from a viewpoint of reducing odor of the obtained polyphenylene ether.

### (Residual metal)

The amount of residual metal catalyst in the polyphenylene ether (A) is preferably less than 1.0 ppm, and more preferably less than 0.5 ppm from a viewpoint of inhibiting degradation of the obtained polyphenylene ether caused by heat.

### (Residual amine)

The total amount of amine remaining in the polyphenylene ether (A) is preferably less than 1.0 mass%, more preferably less than 0.5 mass%, and even more preferably less than 0.1 mass% of the amount of the overall polyphenylene ether (A) from a viewpoint of reducing odor of the obtained polyphenylene ether. The amount of residual amine referred to here means the amount of amine that, among the total amount of amine that is contained in the polyphenylene ether after completion of the drying step, excludes amine that is chemically bonded to the polyphenylene ether.

### (Residual monomer)

The amount of residual monomer in the polyphenylene ether (A) is preferably less than 5 mass%, more preferably less than 4 mass%, and even more preferably less than 3 mass% from a viewpoint of reducing odor of the obtained polyphenylene ether.

The polyphenylene ether (A) can also be produced by a redistribution reaction in which a polyphenylene ether derived from a phenol of formula (2) is equilibrated with a phenolic compound of formula (1) in the presence of an oxidant. Redistribution reactions are commonly known in the art and are described, for example, in US 3496236 A by Cooper et al. and US 5880221 A by Liska et al.

Note that no limitations are placed on the method by which a functional group is introduced at a hydroxy group of the unmodified polyphenylene ether. For example, this may be achieved through a reaction that forms an ester bond between a hydroxy group of the unmodified polyphenylene ether and a carboxylic acid having a carbon-carbon double bond (hereinafter, referred to as a carboxylic acid).

Various commonly known methods can be adopted as the method by which an ester bond is formed. For example, a method that involves (a) reaction of a carboxylic acid halide and a hydroxy group at a polymer terminal, (b) reaction with a carboxylic anhydride to form an ester bond, (c) direct reaction with a carboxylic acid, or (d) transesterification may be adopted.

Reaction with a carboxylic acid halide in method (a) is one of the most common methods. A chloride or bromide is generally used as the carboxylic acid halide, though other halides may be used. The reaction may be direct reaction with the hydroxy group or may be reaction with an alkali metal salt of the hydroxy group. Because an acid such as a hydrogen halide is produced in direct reaction of a carboxylic acid halide and a hydroxy group, a weak base such as an amine may also be provided with the aim of trapping the acid.

In reaction with a carboxylic anhydride in method (b) or direct reaction with a carboxylic acid in method (c), a compound such as a carbodiimide or dimethylaminopyridine, for example, may also be provided in order to activate the reaction site and promote the reaction.

In the case of transesterification in method (d), removal of a produced alcohol may be performed as necessary. Moreover, a commonly known metal catalyst may also be provided in order to promote the reaction. After the reaction, washing may be performed using water or an acidic or alkaline aqueous solution in order to remove a by-product such as an amine salt, and the polymer solution may be added dropwise into a poor solvent such as an alcohol in order to collect the target product by reprecipitation. Alternatively, the polymer may be collected through distillation of the solvent under reduced pressure after washing of the polymer solution.

The production method of the modified polyphenylene ether is not limited to the production method of the polyfunctional modified polyphenylene ether of the present embodiment described above, and appropriate adjustments may be made to the order, number of repetitions, etc. of the oxidative polymerization step, the copper extraction and by-product removal step, the liquid-liquid separation step, and the concentration/drying step described above.

Note that the polyphenylene ether of the present embodiment may be obtained by performing oxidative polymerization of 3-pentadecylphenol or a commercially available cardanol, optionally with 2,6-dimethylphenol as a phenol of formula (2), and subsequently introducing at least one substructure selected from the group consisting of formula (10), formula (11), formula (12), and formula (13) into the obtained polyphenylene ether, or may be obtained by performing oxidative polymerization of modified 3-pentadecylphenol or modified cardanol as a phenol of formula (1), optionally with 2,6-dimethylphenol as a phenol of formula (2). As a further example, the polyphenylene ether of the present embodiment may be obtained by performing oxidative polymerization of modified 3-pentadecylphenol or modified cardanol as a phenol of formula (1), optionally with 2,6-dimethylphenol as a phenol of formula (2), and subsequently introducing at least one substructure selected from the group consisting of formula (10), formula (11), formula (12), and formula (13) into the obtained polyphenylene ether.

In yet another example, the polyphenylene ether of the present embodiment may be obtained by performing oxidative polymerization of 4,6-bis(octylthiomethyl)-o-cresol or 4,6-bis(dodecylthiomethyl)-o-cresol as a phenol of formula (4), optionally with 2,6-dimethylphenol as a phenol of formula (2), and subsequently introducing at least one substructure selected from the group consisting of formula (10), formula (11), formula (12), and formula (13) into the obtained polyphenylene ether.

### ((B) Diene elastomer)

The diene elastomer (B) is at least one selected from synthetic rubber and natural rubber. Note that the synthetic rubber and the natural rubber may each be one type of rubber used individually or two or more types of rubber used together.

The weight-average molecular weight of the diene elastomer (B) in the present embodiment is preferably 100,000 or more, more preferably 120,000 or more, and even more preferably 150,000 or more.

The synthetic rubber may be styrene-butadiene rubber (hereinafter, also referred to as SBR), butadiene rubber, isoprene rubber, butyl rubber, halogenated butyl rubber, ethylene propylene diene rubber, butadiene-acrylonitrile polymer rubber, chloroprene rubber, or like, of which, SBR, isoprene rubber, and butadiene rubber are preferable, and SBR and butadiene rubber are more preferable. One of these types of synthetic rubber may be used individually, or two or more of these types of synthetic rubber may be used together.

Note that the diene elastomer in the present embodiment does not include a polymer block that is composed of only vinyl aromatic monomer units.

### • Styrene-butadiene rubber (SBR)

The SBR can be SBR that is typically used in tire applications, and, more specifically, is SBR having a styrene content of preferably 0.1 mass% to 70 mass%, more preferably 5 mass% to 60 mass%, and even more preferably 5 mass% to 50 mass%. Moreover, SBR having a vinyl content of 0.1 mass% to 80 mass% is preferable, and SBR having a vinyl content of 5 mass% to 70 mass% is more preferable.

Note that the vinyl content of SBR in the present specification represents the content of vinyl group-containing monomer units among all units derived from butadiene that are included in the SBR. Likewise, the vinyl content of the diene elastomer (B) represents the content of monomer units that actually have a vinyl group relative to the total amount of monomer units that could possibly have a vinyl group depending on the bonding format.

The weight-average molecular weight (Mw) of the SBR is preferably 100,000 to 2,500,000, more preferably 150,000 to 2,000,000, and even more preferably 150,000 to 1,500,000. When the weight-average molecular weight (Mw) of the SBR is within any of the ranges set forth above, processability of the rubber composition improves, ice gripping performance of a tire obtained from the rubber composition improves, and mechanical strength, wear resistance, and handling stability also improve. Note that the weight-average molecular weight (Mw) referred to in the present specification is a value measured by GPC.

The glass-transition temperature (Tg) of the SBR determined by differential thermal analysis is preferably -95°C to 0°C, more preferably -95°C to -5°C, even more preferably -95°C to -10°C, further preferably -95°C to -15°C, and even further preferably -95°C to -20°C. When the glass-transition temperature is within any of the ranges set forth above, increased viscosity of the rubber composition can be suppressed, and handling of the rubber composition is facilitated.

The production method of the SBR can be any of emulsion polymerization, solution polymerization, gas-phase polymerization, bulk polymerization, etc. without any specific limitations, but emulsion polymerization and solution polymerization, in particular, are preferable.

### (i) Emulsion-polymerized styrene-butadiene rubber (E-SBR)

E-SBR can be produced by typical emulsion polymerization. For example, the E-SBR may be produced by emulsifying and dispersing specific amounts of styrene and butadiene monomers in the presence of an emulsifier and performing emulsion polymerization using a radical polymerization initiator. The emulsifier may be a long chain fatty acid salt having a carbon number of 10 or more or a rosin acid salt, for example. Specifically, the emulsifier may be a potassium salt or sodium salt of a fatty acid such as capric acid, lauric acid, myristic acid, palmitic acid, oleic acid, or stearic acid. Although water is normally used as a dispersion medium, a water-soluble organic solvent such as methanol or ethanol may be included to the extent that stability during polymerization is not impaired. The radical polymerization initiator may be a persulfate such as ammonium persulfate or potassium persulfate, an organic peroxide, hydrogen peroxide, or the like, for example. A chain transfer agent can be used in order to adjust the molecular weight of the obtained E-SBR. The chain transfer agent may be a mercaptan such as t-dodecyl mercaptan or n-dodecyl mercaptan, or may be carbon tetrachloride, thioglycolic acid, diterpene, terpinolene, γ-terpinene, α-methylstyrene dimer, or the like, for example. The temperature of the emulsion polymerization can be selected as appropriate depending on the type of radical polymerization initiator that is used, but is normally preferably 0°C to 100°C, and more preferably 0°C to 60°C. The polymerization format may be continuous polymerization or batch polymerization. The polymerization reaction can be stopped through addition of a polymerization inhibitor. The polymerization inhibitor may be an amine compound such as isopropylhydroxylamine, diethylhydroxylamine, or hydroxylamine; a quinone compound such as hydroquinone or benzoquinone; sodium nitrite; or the like, for example. After the polymerization reaction has stopped, an age resistor may be added as necessary. By removing unreacted monomer from the resultant latex as necessary after the polymerization reaction has stopped, subsequently adding a salt such as sodium chloride, calcium chloride, or potassium chloride as a coagulant, performing coagulation of polymer while adjusting the pH of the coagulation system to a specific value through addition of an acid such as nitric acid or sulfuric acid as necessary, and subsequently separating the dispersion solvent, it is possible to collect the polymer as crumb. The crumb is washed with water, dehydrated, and subsequently dried using a band dryer or the like to yield E-SBR. Note that in the coagulation, the latex and an extender oil in the form of an emulsified dispersion may be mixed in advance as necessary, and the E-SBR may be collected as oil-extended rubber.

### (ii) Solution-polymerized styrene-butadiene rubber (S-SBR)

S-SBR can be produced by typical solution polymerization. For example, the S-SBR can be produced by using an active metal capable of anionic polymerization in a solvent to polymerize styrene and butadiene in the presence of a polar compound as desired.

The active metal capable of anionic polymerization may be an alkali metal such as lithium, sodium, or potassium; an alkaline earth metal such as beryllium, magnesium, calcium, strontium, or barium; a lanthanoid rare earth metal such as lanthanum or neodymium; or the like, for example. Of these metals, alkali metals and alkaline earth metals are preferable, and alkali metals are more preferable. Moreover, among alkali metals, the use of an organic alkali metal compound is more preferable. The solvent may be an aliphatic hydrocarbon such as n-butane, n-pentane, isopentane, n-hexane, n-heptane, or isooctane; an alicyclic hydrocarbon such as cyclopentane, cyclohexane, or methylcyclopentane; an aromatic hydrocarbon such as benzene or toluene, or the like, for example. These solvents are preferably used within a range resulting in a monomer concentration of 1 mass% to 50 mass%.

The organic alkali metal compound may be an organic monolithium compound such as n-butyllithium, sec-butyllithium, t-butyllithium, hexyllithium, phenyllithium, or stilbenelithium; a polyfunctional organic lithium compound such as dilithiomethane, 1,4-dilithiobutane, 1,4-dilithio-2-ethylcyclohexane, or 1,3,5-trilithiobenzene; sodium naphthalene; potassium naphthalene; or the like, for example. Of these organic alkali metal compounds, organic lithium compounds are preferable, and organic monolithium compounds are more preferable. The amount of the organic alkali metal compound that is used can be set according to the desired molecular weight of the S-SBR. The organic alkali metal compound can be caused to react with a secondary amine such as dibutylamine, dihexylamine, or dibenzylamine and then be used as an organic alkali metal amide. No specific limitations are placed on the polar compound so long as it does not cause reaction deactivation in anionic polymerization and is a compound that is typically used for adjusting the microstructure of butadiene moieties or their distribution in a polymer chain of styrene. For example, the polar compound may be an ether compound such as dibutyl ether, tetrahydrofuran, or ethylene glycol diethyl ether; a tertiary amine such as tetramethylethylenediamine or trimethylamine; an alkali metal alkoxide; a phosphine compound; or the like.

The temperature of the polymerization reaction is normally -80°C to 150°C, preferably 0°C to 100°C, and more preferably 30°C to 90°C. The polymerization format may be batch polymerization or continuous polymerization. In order to improve random copolymerizability of styrene and butadiene, it is preferable that styrene and butadiene are supplied into the reaction liquid continuously or intermittently such that the composition ratio of styrene and butadiene in the polymerization system is within a specific range. The polymerization reaction can be stopped by adding an alcohol such as methanol or isopropanol as a polymerization inhibitor. Prior to addition of the polymerization inhibitor, a coupling agent such as tin tetrachloride, tetrachlorosilane, tetramethoxysilane, tetraglycidyl-1,3-bisaminomethylcyclohexane, or 2,4-tolylene diisocyanate or a polymerization terminal modifying agent such as 4,4'-bis(diethylamino)benzophenone or N-vinylpyrrolidone that can react with a polymerization active terminal may be added. The polymerization solution present after the polymerization reaction has stopped is subjected to direct drying, steam stripping, or the like so as to separate the solvent and enable collection of the target S-SBR. Note that the polymerization solution and an extender oil may be mixed in advance, prior to removal of the solvent, and the S-SBR may be collected as oil-extended rubber.

### (iii) Modified styrene-butadiene rubber (modified SBR)

In the present embodiment, modified SBR obtained by introducing a functional group into SBR may be used. The functional group may be an amino group, an alkoxysilyl group, a hydroxy group, an epoxy group, a carboxyl group, or the like, for example. The production method of the modified SBR may be a method in which a coupling agent such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane, or 2,4-tolylene diisocyanate, a polymerization terminal modifying agent such as 4,4'-bis(diethylamino)benzophenone or N-vinylpyrrolidone, or another modifying agent described in JP 2011-132298 A that can react with a polymerization active terminal is added prior to addition of a polymerization inhibitor. In this modified SBR, the location where the functional group is introduced into the polymer may be a polymerization terminal or may be a side chain of a polymer chain.

### • Isoprene rubber

The isoprene rubber can, for example, be commercially available isoprene rubber that has been polymerized using a Ziegler catalyst such as a titanium tetrahalide-trialkylaluminum system, a diethylaluminum chloride-cobalt system, a trialkylaluminum-boron trifluoride-nickel system, or a diethylaluminum chloride-nickel system; a lanthanoid rare earth metal catalyst such as a triethylaluminum-organic acid neodymium salt-Lewis acid system; or an organic alkali metal compound in the same manner as S-SBR. Isoprene rubber polymerized using a Ziegler catalyst has a high cis-isomer content and is preferable. Moreover, ultra-high cis-isomer content isoprene rubber obtained using a lanthanoid rare earth metal catalyst may be used.

The vinyl content of the isoprene rubber is preferably 50 mass% or less, more preferably 40 mass% or less, and even more preferably 30 mass% or less. High fuel efficiency tends to deteriorate when the vinyl content exceeds 50 mass%. No specific limitations are placed on the lower limit for the vinyl content. The glass-transition temperature varies depending on the vinyl content but is preferably -20°C or lower, and more preferably -30°C or lower. The weight-average molecular weight (Mw) of the isoprene rubber is preferably 90,000 to 2,000,000, and more preferably 150,000 to 1,500,000. When the weight-average molecular weight of the isoprene rubber is within any of the ranges set forth above, processability of the rubber composition improves, ice gripping performance improves, and handling stability also improves. The isoprene rubber may have, in part thereof, a branched structure or polar functional group that has been formed using a modifying agent such as a polyfunctional modifying agent, examples of which include tin tetrachloride, silicon tetrachloride, an alkoxysilane having an epoxy group in a molecule thereof, and an amino group-containing alkoxysilane.

### • Butadiene rubber

The butadiene rubber can, for example, be commercially available butadiene rubber that has been polymerized using a Ziegler catalyst such as a titanium tetrahalide-trialkylaluminum system, a diethylaluminum chloride-cobalt system, a trialkylaluminum-boron trifluoride-nickel system, or a diethylaluminum chloride-nickel system; a lanthanoid rare earth metal catalyst such as a triethylaluminum-organic acid neodymium salt-Lewis acid system; or an organic alkali metal compound in the same manner as S-SBR. Butadiene rubber polymerized using a Ziegler catalyst has high cis-isomer content and is preferable. Moreover, ultra-high cis-isomer content (for example, cis isomer content of 95% or more) butadiene rubber obtained using a lanthanoid rare earth metal catalyst may be used. The vinyl content of the butadiene rubber is preferably 50 mass% or less, more preferably 40 mass% or less, and even more preferably 30 mass% or less. High fuel efficiency tends to deteriorate when the vinyl content exceeds 50 mass%. No specific limitations are placed on the lower limit for the vinyl content. The glass-transition temperature varies depending on the vinyl content but is preferably -40°C or lower, and more preferably -50°C or lower.

The weight-average molecular weight (Mw) of the butadiene rubber is preferably 90,000 to 2,000,000, and more preferably 150,000 to 1,500,000. When the weight-average molecular weight (Mw) of the butadiene rubber is within any of the ranges set forth above, processability of the rubber composition improves, and ice gripping performance and handling stability also improve. The butadiene rubber may have, in part thereof, a branched structure or polar functional group that has been formed using a modifying agent such as a polyfunctional modifying agent, examples of which include tin tetrachloride, silicon tetrachloride, an alkoxysilane having an epoxy group in a molecule thereof, and an amino group-containing alkoxysilane. One type or two or more types of butyl rubber, halogenated butyl rubber, ethylene propylene diene rubber, butadiene-acrylonitrile polymer rubber, chloroprene rubber, etc. can be used together with at least one type of SBR, isoprene rubber, or butadiene rubber. No specific limitations are placed on the production method thereof, and commercially available products can be used.

### • Natural rubber

Natural rubber used in the diene elastomer (B) may be natural rubber, high-purity natural rubber, epoxidized natural rubber, hydroxylated natural rubber, hydrogenated natural rubber, grafted natural rubber, or other modified natural rubber that is typically used in the tire industry such as TSR (SMR, SIR, STR, etc.) or RSS. In particular, SMR20, STR20, and RSS#3 are preferable in terms of having little variation in quality and in terms of ease of acquisition. One of these types of natural rubber may be used individually, or two or more of these types of natural rubber may be used together.

From a viewpoint of processability, high fuel efficiency, wet gripping performance, and ice gripping performance of the obtained rubber composition, the rubber composition preferably contains 0.01 parts by mass to 65 parts by mass, more preferably 0.01 parts by mass to 60 parts by mass, and even more preferably 0.01 parts by mass to 55 parts by mass of the polyphenylene ether (A) relative to 100 parts by mass of the diene elastomer (B). Note that a rubber composition containing in excess of 65 parts by mass of the polyphenylene ether (A) relative to 100 parts by mass of the diene elastomer (B) tends to have inferior high fuel efficiency, wet gripping performance, and ice gripping performance.

### (Other components)

Besides the polyphenylene ether and the diene elastomer described above, the rubber composition of the present embodiment may contain other components such as a filler, a silane coupling agent, a vulcanization agent, a vulcanization accelerator, and a vulcanization aid so long as the effects according to the present disclosure are not impaired.

Although no specific limitations are placed on the filler so long as it is a filler that is typically used in rubber compositions, the inclusion of at least one selected from silica and carbon black is preferable from a viewpoint of improving dispersibility of the filler in the rubber composition and a viewpoint of improving high fuel efficiency and gripping performance.

### • Silica

The silica may be wet silica (hydrated silica), dry silica (anhydrous silica), calcium silicate, aluminum silicate, or the like, for example. In particular, wet silica is preferable from a viewpoint of even further improving high fuel efficiency and gripping performance of the rubber composition. One of these types of silica may be used individually, or two or more of these types of silica may be used together.

Note that from a viewpoint of improving processability, high fuel efficiency, shaping processability, wear resistance, and gripping performance of the rubber composition, the average particle diameter of the silica is preferably 0.5 nm or more, more preferably 2 nm or more, even more preferably 5 nm or more, further preferably 8 nm or more, and even further preferably 10 nm or more, and is preferably 200 nm or less, more preferably 150 nm or less, even more preferably 100 nm or less, further preferably 50 nm or less, even further preferably 30 nm or less, and yet further preferably 20 nm or less. Also note that the average particle diameter of the silica can be determined by measuring the diameters of particles using a transmission electron microscope and calculating an average value of the diameters.

### • Carbon black

The carbon black can be furnace black, channel black, thermal black, acetylene black, Ketjenblack, or the like. In particular, furnace black is preferable from a viewpoint of improving high fuel efficiency and gripping performance of the rubber composition.

Examples of commercially available products of furnace black that can be used in the present embodiment include DIABLACK produced by Mitsubishi Chemical Corporation and SEAST produced by Tokai Carbon Co., Ltd. Examples of commercially available products of acetylene black include DENKA BLACK produced by Denka Company Limited. Examples of commercially available products of Ketjenblack include ECP600JD produced by Lion Corporation.

Note that from a viewpoint of high fuel efficiency, shaping processability, wear resistance, and gripping performance of the rubber composition, the average particle diameter of the carbon black is preferably 5 nm or more, more preferably 10 nm or more, and even more preferably 15 nm or more, and is preferably 100 nm or less, more preferably 80 nm or less, even more preferably 70 nm or less, and further preferably 60 nm or less. Also note that the average particle diameter of the carbon black can be determined by measuring the diameters of particles using a transmission electron microscope and calculating an average value of the diameters. The particle size of the carbon black can be adjusted through grinding or the like. Grinding of the carbon black can be performed using high-speed rotary grinders (hammer mill, pin mill, cage mill), various types of ball mills (rolling mill, vibratory mill, planetary mill), stirring mills (bead mill, attritor, tubular mill, annular mill), and so forth.

The carbon black may be subjected to acid treatment using nitric acid, sulfuric acid, hydrochloric acid, or a mixed acid thereof or surface oxidation treatment through heat treatment in the presence of air from a viewpoint of improving wettability with the polyphenylene ether (A) and the diene elastomer (B) and dispersibility. In the present disclosure, heat treatment may be performed at 2,000°C to 3,000°C in the presence of a graphitization catalyst from a viewpoint of improving mechanical strength. Examples of graphitization catalysts that can suitably be used include boron, boron oxides (B₂O₂, B₂O₃, B₄O₃, B₄O₅, etc.), boron oxoacids (orthoboric acid, metaboric acid, tetraboric acid, etc.) and salts thereof, boron carbides (B₄C, B₆C, etc.), boron nitride (BN), and other boron compounds.

### • Other fillers

In the present disclosure, a filler other than silica and carbon black may be included with aims such as improving mechanical strength of the rubber composition and improving production cost through compounding of a filler as a bulking agent. Examples of fillers other than silica and carbon black that can be used include organic fillers and also inorganic fillers such as clay, talc, mica, calcium carbonate, magnesium hydroxide, aluminum hydroxide, barium sulfate, titanium oxide, glass fiber, fibrous fillers, and glass balloons. One of these fillers may be used individually, or two or more of these fillers may be used together.

In a case in which the filler described above is compounded in the rubber composition of the present embodiment, the content of the filler is preferably 20 parts by mass to 150 parts by mass relative to 100 parts by mass of the diene elastomer (B). When the amount of the filler is within the range set forth above, high fuel efficiency, shaping processability, wear resistance, and gripping performance of the rubber composition can be further improved. From the same viewpoint, the content of the filler is preferably 30 parts by mass or more, more preferably 40 parts by mass or more, even more preferably 45 parts by mass or more, further preferably 50 parts by mass or more, even further preferably 55 parts by mass or more, yet further preferably 60 parts by mass or more, and yet more preferably 65 parts by mass or more relative to 100 parts by mass of the diene elastomer (B), and is preferably 120 parts by mass or less, more preferably 100 parts by mass or less, even more preferably 90 parts by mass or less, further preferably 85 parts by mass or less, even further preferably 80 parts by mass or less, and yet further preferably 75 parts by mass or less relative to 100 parts by mass of the diene elastomer (B).

Moreover, in a case in which silica is used as the filler, the content of the silica, from a viewpoint of improving high fuel efficiency and ice gripping performance of a tire having the rubber composition for tire tread used in part thereof, is preferably 10 parts by mass or more, more preferably 20 parts by mass or more, even more preferably 25 parts by mass or more, further preferably 30 parts by mass or more, even further preferably 35 parts by mass or more, yet further preferably 40 parts by mass or more, and yet more preferably 45 parts by mass or more relative to 100 parts by mass of the diene elastomer (B), and is preferably 115 parts by mass or less, more preferably 90 parts by mass or less, even more preferably 80 parts by mass or less, further preferably 75 parts by mass or less, even further preferably 70 parts by mass or less, and yet further preferably 65 parts by mass or less relative to 100 parts by mass of the diene elastomer (B).

Furthermore, in a case in which carbon black is used as the filler, the content of the carbon black, from a viewpoint of improving high fuel efficiency, wear resistance, and gripping performance of the rubber composition, is preferably 5 parts by mass or more, more preferably 10 parts by mass or more, even more preferably 15 parts by mass or more, further preferably 20 parts by mass or more, even further preferably 25 parts by mass or more, and yet further preferably 30 parts by mass or more relative to 100 parts by mass of the diene elastomer (B), and is preferably 75 parts by mass or less, more preferably 65 parts by mass or less, even more preferably 55 parts by mass or less, further preferably 45 parts by mass or less, even further preferably 40 parts by mass or less, and yet further preferably 35 parts by mass or less relative to 100 parts by mass of the diene elastomer (B).

### • Silane coupling agent

The rubber composition of the present embodiment can further contain a silane coupling agent. The silane coupling agent may be a sulfide compound, a mercapto compound, a vinyl compound, an amino compound, a glycidoxy compound, a nitro compound, a chloro compound, or the like.

The sulfide compound may be bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-trimethoxysilylethyl-N,N-dimethylthiocarbamoyl tetrasulfide, 3-trimethoxysilylpropylbenzothiazole tetrasulfide, 3-triethoxysilypropylbenzothiazole tetrasulfide, 3-triethoxysilylpropyl methacrylate monosulfide, 3-trimethoxysilylpropyl methacrylate monosulfide, or the like, for example.

The mercapto compound may be 3-mercaptopropyltrimethoxysilane, 3-mercaptopropyltriethoxysilane, 2-mercaptoethyltrimethoxysilane, 2-mercaptoethyltriethoxysilane, or the like, for example.

The vinyl compound may be vinyltriethoxysilane, vinyltrimethoxysilane, or the like, for example.

The amino compound may be 3-aminopropyltriethoxysilane, 3-aminopropyltrimethoxysilane, 3-(2-aminoethyl)aminopropyltriethoxysilane, 3-(2-aminoethyl)aminopropyltrimethoxysilane, or the like, for example.

The glycidoxy compound may be γ-glycidoxypropyltriethoxysilane, γ-glycidoxypropyltrimethoxysilane, γ-glycidoxypropylmethyldiethoxysilane, γ-glycidoxypropylmethyldimethoxysilane, or the like, for example.

The nitro compound may be 3-nitropropyltrimethoxysilane, 3-nitropropyltriethoxysilane, or the like, for example.

The chloro compound may be 3-chloropropyltrimethoxysilane, 3-chloropropyltriethoxysilane, 2-chloroethyltrimethoxysilane, 2-chloroethyltriethoxysilane, or the like, for example.

Note that one of these silane coupling agents may be used individually, or two or more of these silane coupling agents may be used together. In particular, silane coupling agents that include sulfur such as sulfide compounds and mercapto compounds are preferable from a viewpoint of having a large reinforcing effect.

In a case in which the rubber composition of the present embodiment contains a silane coupling agent, the content of the silane coupling agent is preferably 0.1 parts by mass to 30 parts by mass, more preferably 0.5 parts by mass to 20 parts by mass, and even more preferably 1 part by mass to 15 parts by mass relative to 100 parts by mass of the diene elastomer (B). When the amount of the silane coupling agent is within any of the ranges set forth above, wear resistance of the rubber composition improves.

### • Vulcanization agent

The rubber composition of the present embodiment preferably contains a vulcanization agent. The vulcanization agent may be sulfur or a sulfur compound, for example. One of these vulcanization agents may be used individually, or two or more of these vulcanization agents may be used together.

In a case in which the rubber composition of the present embodiment contains a vulcanization agent, the content of the vulcanization agent is preferably 0.1 parts by mass to 10 parts by mass, more preferably 0.5 parts by mass to 10 parts by mass, and even more preferably 0.8 parts by mass to 5 parts by mass relative to 100 parts by mass of the diene elastomer (B).

### • Vulcanization accelerator

The rubber composition of the present embodiment may contain a vulcanization accelerator. The vulcanization accelerator may be a guanidine compound, a sulfenamide compound, a thiazole compound, a thiuram compound, a thiourea compound, a dithiocarbamic acid compound, an aldehyde-amine compound, an aldehyde-ammonia compound, an imidazoline compound, a xanthate compound, or the like, for example. One of these vulcanization accelerators may be used individually, or two or more of these vulcanization accelerators may be used together.

In a case in which the rubber composition of the present embodiment contains a vulcanization accelerator, the content of the vulcanization accelerator is preferably 0.1 parts by mass to 15 parts by mass, and more preferably 0.1 parts by mass to 10 parts by mass relative to 100 parts by mass of the diene elastomer (B).

### • Vulcanization aid

The rubber composition of the present embodiment may contain a vulcanization aid. The vulcanization aid may be a fatty acid such as stearic acid, a metal oxide such as zinc oxide, or a fatty acid metal salt such as zinc stearate, for example. One of these vulcanization aids may be used individually, or two or more of these vulcanization aids may be used together.

In a case in which the rubber composition of the present embodiment contains a vulcanization aid, the content of the vulcanization aid is preferably 0.1 parts by mass to 15 parts by mass, and more preferably 1 part by mass to 10 parts by mass relative to 100 parts by mass of the diene elastomer (B).

### • Other components

The rubber composition may contain a process oil such as silicon oil, aromatic oil, TDAE (Treated Distilled Aromatic Extracts), MES (Mild Extracted Solvates), RAE (Residual Aromatic Extracts), paraffinic oil, or naphthenic oil, a resin component such as an aliphatic hydrocarbon resin, alicyclic hydrocarbon resin, C9 resin, rosin resin, coumarone-indene resin, or phenolic resin, or a liquid polymer such as low molecular weight polybutadiene, low molecular weight polyisoprene, low molecular weight styrene-butadiene polymer, or low molecular weight styrene-isoprene polymer as a softener as necessary with the aim of enhancing processability, fluidity, etc.

In a case in which the rubber composition contains the process oil, resin component, or liquid polymer described above as a softener, the amount of the softener is preferably 50 parts by mass or less, more preferably 30 parts by mass or less, and even more preferably 15 parts by mass or less relative to 100 parts by mass of the diene elastomer (B) from a viewpoint of bleeding resistance.

In addition, the rubber composition of the present embodiment may contain one type or two or more types of additives such as age resistors, antioxidants, waxes, lubricants, light stabilizers, scorch inhibitors, processing aid, colorants such as pigments and dyes, flame retardants, antistatic agents, matting agents, blocking inhibitors, ultraviolet absorbers, mold release agents, foaming agents, antibacterial agents, fungicides, and fragrances with the aim of improving weatherability, heat resistance, oxidation resistance, and so forth.

The antioxidant may be a hindered phenol compound, a phosphoric compound, a lactone compound, a hydroxyl compound, or the like, for example.

The age resistor may be an amine-ketone compound, an imidazole compound, an amine compound, a phenolic compound, a sulfuric compound, a phosphoric compound, or the like, for example.

Note that the rubber composition of the present embodiment may contain a crosslinking agent other than a vulcanization agent. The crosslinking agent may be oxygen, an organic peroxide, a phenolic resin, an amino resin, quinone or a quinone dioxime derivative, a halogen compound, an aldehyde compound, an alcohol compound, an epoxy compound, a metal halide, an organic metal halide, a silane compound, or the like, for example. One of these crosslinking agents may be used individually, or two or more of these crosslinking agents may be used together. The amount of the crosslinking agent is preferably 0.1 parts by mass to 10 parts by mass relative to 100 parts by mass of the diene elastomer (B).

### <Production method of rubber composition for tire tread>

No specific limitations are placed on the production method of the rubber composition for tire tread so long as the components described above can be uniformly mixed. The uniform mixing may be performed using a tangential or intermeshing-type closed kneader such as a kneader ruder, a Brabender, a Banbury mixer, or an internal mixer, a single-screw extruder, a twin-screw extruder, a mixing roll, a roller, or the like, and can normally be performed in a temperature range of 30°C to 270°C.

The rubber composition for tire tread is preferably vulcanized and then used as vulcanized rubber. Although no specific limitations are placed on the vulcanization conditions and method, the vulcanization is preferably performed using a vulcanization mold under conditions of a vulcanization temperature of 120°C to 200°C and a vulcanization pressure of 0.5 MPa to 20 MPa.

A polyphenylene ether (A) that includes a repeating unit derived from a phenol of formula (1) has high crosslinking reactivity since a plurality of reaction sites with the diene elastomer (B) during vulcanization are present on side chains protruding out from a main chain of a molecule and because there is little steric hinderance and high frequency of collisions between molecules.

### <Method of using polyphenylene ether>

A method of using a polyphenylene ether of the present embodiment involves using a polyphenylene ether having a glass-transition temperature of not lower than -100°C and lower than 0°C as measured by differential scanning calorimetry (DSC) as a raw material of a composition for a tire.

By using a polyphenylene ether having a glass-transition temperature of not lower than -100°C and lower than 0°C as measured by differential scanning calorimetry (DSC) in a rubber composition in this manner, it is possible to obtain a rubber composition having a balance of high levels of processability, high fuel efficiency, wet gripping performance, and ice gripping performance.

Note that the configuration of the aforementioned polyphenylene ether is the same as in contents previously described in relation to the rubber composition according to the present disclosure.

The rubber composition of the present embodiment is preferably adopted in an automobile component, and is more preferably adopted in a tire member.

Specifically, the rubber composition can suitably be adopted in one or more members among a tread portion, a sidewall portion, a shoulder portion, a carcass portion, a belt portion, a bead portion, a rim cushion portion, a run flat reinforcement liner portion, and other reinforcing rubber portions. In a case in which the rubber composition of the present embodiment is adopted in the tread of a tire, for example, the rubber composition of the present embodiment may be extruded and processed into the shape of a tread portion of a tire while still in an unvulcanized state, may be affixed on a tire forming machine by a standard method, and then an unvulcanized tire may be shaped. A tire can then be obtained through heating and pressing of the unvulcanized tire in a vulcanization machine. Note that in the present embodiment, the term "tire" refers to a pneumatic tire, and the tire can be used for a passenger vehicle, a truck, a bus, heavy machinery, and so forth.

### EXAMPLES

The following provides an even more detailed description of the present embodiment based on examples. However, the present embodiment is not limited to the following examples.

The following describes measurement methods of physical properties of polyphenylene ethers.

### (1) Number-average molecular weight and weight-average molecular weight of polyphenylene ether

Using a gel permeation chromatograph (LC-2030C Plus produced by Shimadzu Corporation) as a measurement instrument, a calibration curve was prepared with standard polystyrene and ethylbenzene, and then this calibration curve was used to measure the number-average molecular weight (Mn) and the weight-average molecular weight (Mw) of an obtained modified polyphenylene ether. The standard polystyrene was polystyrene having molecular weights of 3,650,000, 2,170,000, 1,090,000, 681,000, 204,000, 52,000, 30,200, 13,800, 3,360, 1,300, and 550.

Two K-805L columns produced by Showa Denko K.K. that were connected in series were used as a column. Chloroform was used as a solvent, and measurement was performed with the flow rate of the solvent set as 1.0 mL/min and the column temperature set as 40°C. A 1 g/L chloroform solution of the polyphenylene ether was prepared for use as a measurement sample. The UV wavelength of the detector was set as 254 nm in the case of standard polystyrene and as 283 nm in the case of polyphenylene ether. The number-average molecular weight and the weight-average molecular weight were calculated from a proportion of peak area based on a curve indicating a molecular weight distribution obtained by GPC based on the measurement data.

### (2) Measurement of glass-transition temperature

The glass-transition temperature of a polyphenylene ether was measured using a differential scanning calorimetry measurement instrument DSC250 (TA Instruments). In a nitrogen atmosphere, heating was performed from -120°C to 250°C at a heating rate of 10°C/min, cooling was then performed to -120°C at 20°C/min, and then the glass-transition temperature was measured at a heating rate of 10°C/min.

### (3) Measurement of viscosity at 80°C

The viscosity at 80°C of a polyphenylene ether was measured using an EMS viscometer (EMS-1000S produced by Kyoto Electronics Manufacturing Co., Ltd.) and using a ϕ4.7 mm spherical probe under conditions of a motor speed of 1,000 rpm and a measurement time of 5 minutes. A judgment was made by the following index.
O: Viscosity at 80°C of less than 500,000 cP
Δ: Viscosity at 80°C of not less than 500,000 cP and less than 1,000,000 cP
×: Viscosity at 80°C of not less than 1,000,000 or does not melt

### (4) Measurement of amount of residual solvent (PPE-4)

1 g of polyphenylene ether was dissolved in 5 g of chloroform and was then solidified in 5 g of methanol. A gas chromatograph (GC-2010 Plus produced by Shimadzu Corporation) was used to measure 1 µL of solution from which solid had been removed in order to measure the amount of residual solvent.

### (5) Measurement of amount of residual catalyst (PPE-4)

30 g of n-butanol was added to 3 g of polyphenylene ether, and the polyphenylene ether was then dispersed. In addition, 30 g of toluene was added, and the polyphenylene ether was dissolved. 10 g of 1N-HCl was added, 10 minutes of vigorous stirring was performed at 40°C, and then settling was performed in order to collect the aqueous layer. 10 g of 1N-HCl was added once again to the organic layer, 10 minutes of vigorous stirring was performed at 40°C once again, and then settling was performed in order to collect the aqueous layer. The two aqueous layers were combined, the weight thereof was measured, and the amount of residual copper was measured using an atomic absorption spectrophotometer (AA-7800 produced by Shimadzu Corporation).

### (6) Measurement of amount of residual amine (PPE-4)

1 g of polyphenylene ether was dissolved in 5 g of chloroform and was then solidified in 5 g of methanol. A gas chromatograph (GC-2010 Plus produced by Shimadzu Corporation) was used to measure 1 µL of solution from which solid had been removed in order to measure the amount of residual amine.

### (7) Measurement of amount of residual monomer (PPE-4)

0.5 g of polyphenylene ether was made up to 10 mL using chloroform and was then solidified in 10 mL of acetonitrile. Solution from which solid had been removed was used. A high-performance liquid chromatograph (Extrema produced by JASCO Corporation) was used as a measurement instrument. An XBridge BEH C18 Column, 130 angstroms, 5 µm, 4.6 mm × 150 mm, 1/pk produced by Waters Corporation was used as a column. The mobile phase was 0.1 vol% formic acid-acetonitrile, and measurement was performed with the solvent flow rate set as 0.5 mL/min and the column temperature set as 40°C. The UV wavelength of the detector was set as 280 nm. The amount of residual monomer was calculated from peak area determined by high-performance liquid chromatography based on the measurement data.

### <Synthesis of polyphenylene ethers (PPE-1 to PPE-9)>

Polyphenylene ethers (PPE-1 to PPE-9) obtained as described below were used in the subsequently described examples and comparative examples.

### (Synthesis of modified cardanol)

Cardanol (product name: NX-2026; produced by Cardolite Corporation; 345 g) obtained from CNSL and p-toluenesulfonic acid monohydrate (5.9 g) were added, in order, to a 1 L flask to which a -10°C Dewar cooler had been connected and were stirred by a stirring blade. Thereafter, the mixture was heated with an aluminum block heating device with the external temperature set as 80°C. Isobutene (100 g) was gradually introduced over 10 hours. The supply of isobutene was stopped, and then stirring was continued for 15 hours at 80°C. The temperature of the reaction solution was lowered to 40°C, and toluene (300 g) was added to the reaction solution. In addition, 5% sodium hydroxide aqueous solution (27 g) was added dropwise. Deionized water (320 g) was then added, the temperature of the reaction solution was raised to 70°C, and stirring was performed for 30 minutes. Thereafter, a separating funnel was used to collect the organic layer. Deionized water (760 g) was added to the collected organic layer, the temperature of the reaction solution was raised to 70°C, and the reaction solution was stirred for 30 minutes and then left to settle. A separating funnel was used to collect the organic layer. The organic layer that has been obtained through washing was concentrated by a rotary evaporator to yield pale yellow oil-like modified cardanol (370 g).

Structural identification of the obtained compound was performed by ¹H-NMR. As a result, cardanol having a tert-butyl group introduced at the 2-position of the pre-reaction cardanol raw material was confirmed to be the main component.

Cardanol raw material: ¹H-NMR (CDCl₃) δ 7.15-7.10 (m, 1H), 6.78-6.73 (m, 1H), 6.68-6.62 (m, 2H), 5.88-5.77 (m, 0.37H), 5.50-5.29 (m, 3.44H), 5.10-4.95 (m, 0.80H), 4.81-4.64 (m, 1H), 2.88-2.75 (m, 2.14H), 2.55 (t, 2.13H), 2.08-1.98 (m, 3.31H), 1.69-1.53 (m, 3.15H), 1.51-1.12 (m, 14.10H), 0.94-0.85 (m, 1.95H)

Modified cardanol (product): ¹H-NMR (CDCl₃) δ 7.16 (d, 1H), 6.69 (dd, 1H), 6.49 (d, 1H), 5.88-5.77 (m, 0.39H), 5.50-5.29 (m, 3.56H), 5.10-4.95 (m, 0.80H), 4.64 (s, 1H), 2.87-2.75 (m, 2.12H), 2.56-2.46 (m, 2.22H), 2.12-1.95 (m, 3.60), 1.65-1.53 (m, 2.62H), 1.43-1.24 (m, 23.42H), 0.96-0.80 (m, 2.20H)

### (Synthesis of polyphenylene ether 1 (PPE-1))

In a 1.5 L jacketed reactor equipped with a line for introducing nitrogen gas into an upper part of the reactor, a sparger for introducing an oxygen-containing gas into a bottom part of the reactor, a stirring turbine blade, a baffle, and a reflux condenser in a vent gas line at the upper part of the reactor, nitrogen gas was caused to flow at a rate of 1.24 L/min while loading a pre-prepared mixture of 0.064 g of cuprous oxide and 0.482 g of 47% hydrogen bromide, and also 0.154 g of N,N'-di-t-butylethylenediamine, 2.28 g of dimethyl-n-butylamine, 0.748 g of di-n-butylamine, 80.0 g of the modified cardanol, 0.05 g of methyltri-n-octylammonium chloride, and 716 g of toluene. Next, air was introduced into the reactor at a rate of 0.84 L/min by the sparger under vigorous stirring. The polymerization temperature was held at 35°C through adjustment by passing a heating medium through the jacket. At 120 minutes after the start of introduction of air, the air was stopped, nitrogen gas purging of the inside of the reactor was performed, and then 0.689 g of ethylenediaminetetraacetic acid tetrasodium salt tetrahydrate (reagent produced by Dojindo Laboratories) was added as an aqueous solution in 80.0 g of water. The temperature was raised to 70°C, and 2 hours of copper extraction was performed at 70°C. Thereafter, separation into a polyphenylene ether solution (organic phase) and an aqueous phase into which the catalyst metal had transferred was performed by settled separation. Solvent of the organic phase was then removed by a rotary evaporator.

The resultant liquid polyphenylene ether was subjected to various measurements by the previously described methods. The analysis results are shown in Table 1.

### (Synthesis of polyphenylene ether 2 (PPE-2))

In a 1.5 L jacketed reactor equipped with a line for introducing nitrogen gas into an upper part of the reactor, a sparger for introducing an oxygen-containing gas into a bottom part of the reactor, a stirring turbine blade, a baffle, and a reflux condenser in a vent gas line at the upper part of the reactor, nitrogen gas was caused to flow at a rate of 1.24 L/min while loading a pre-prepared mixture of 0.074 g of cuprous oxide and 0.555 g of 47% hydrogen bromide, and also 0.178 g of N,N'-di-t-butylethylenediamine, 2.62 g of dimethyl-n-butylamine, 0.861 g of di-n-butylamine, 6.31 g of 2,6-dimethylphenol, 73.7 g of the modified cardanol, 0.05 g of methyltri-n-octylammonium chloride, and 716 g of toluene. Next, air was introduced into the reactor at a rate of 0.84 L/min by the sparger under vigorous stirring. The polymerization temperature was held at 35°C through adjustment by passing a heating medium through the jacket. At 120 minutes after the start of introduction of air, the air was stopped, nitrogen gas purging of the inside of the reactor was performed, and then 0.794 g of ethylenediaminetetraacetic acid tetrasodium salt tetrahydrate (reagent produced by Dojindo Laboratories) was added as an aqueous solution in 80.0 g of water. The temperature was raised to 70°C, and 2 hours of copper extraction was performed at 70°C. Thereafter, separation into a polyphenylene ether solution (organic phase) and an aqueous phase into which the catalyst metal had transferred was performed by settled separation. Solvent of the organic phase was then removed by a rotary evaporator.

The resultant liquid polyphenylene ether was subjected to various measurements by the previously described methods. The analysis results are shown in Table 1.

### (Synthesis of polyphenylene ether 3 (PPE-3))

In a 1.0 L jacketed reactor equipped with a line for introducing nitrogen gas into an upper part of the reactor, a sparger for introducing an oxygen-containing gas into a bottom part of the reactor, a stirring turbine blade, a baffle, and a reflux condenser in a vent gas line at the upper part of the reactor, nitrogen gas was caused to flow at a rate of 1.16 L/min while loading a pre-prepared mixture of 0.068 g of cuprous oxide and 0.511 g of 47% hydrogen bromide, and also 0.164 g of N,N'-di-t-butylethylenediamine, 2.41 g of dimethyl-n-butylamine, 0.793 g of di-n-butylamine, 43.8 g of 2,6-dimethylphenol, 31.2 g of 4,6-bis(octylthiomethyl)-o-cresol, 0.05 g of methyltri-n-octylammonium chloride, and 421 g of toluene. Next, air was introduced into the reactor at a rate of 0.79 L/min by the sparger under vigorous stirring. The polymerization temperature was held at 40°C through adjustment by passing a heating medium through the jacket. At 120 minutes after the start of introduction of air, the air was stopped, nitrogen gas purging of the inside of the reactor was performed, and then 0.73 g of ethylenediaminetetraacetic acid tetrasodium salt tetrahydrate (reagent produced by Dojindo Laboratories) was added as an aqueous solution in 50.0 g of water. The temperature was raised to 70°C, and 2 hours of copper extraction was performed at 70°C. Thereafter, separation into a polyphenylene ether solution (organic phase) and an aqueous phase into which the catalyst metal had transferred was performed by settled separation. Solvent of the organic phase was then removed by a rotary evaporator.

The resultant liquid polyphenylene ether was subjected to various measurements by the previously described methods. The analysis results are shown in Table 1.

### (Synthesis of polyphenylene ether 4 (PPE-4))

A liquid polyphenylene ether was obtained under the same conditions as in Production Example 3 with the exception that 10.2 g of 2,6-dimethylphenol and 69.8 g of the modified cardanol were used.

The resultant liquid polyphenylene ether was subjected to various measurements by the previously described methods. The analysis results are shown in Table 1. Note that the amount of residual solvent was 0.084 mass%, the amount of residual catalyst was 0.02 ppm, the amount of residual amine was 300 ppm, and the amount of residual monomer was 1.5 mass%.

### (Synthesis of polyphenylene ether 5 (PPE-5))

A liquid polyphenylene ether was obtained under the same conditions as in Production Example 3 with the exception that 27.1 g of 2,6-dimethylphenol and 52.9 g of the modified cardanol were used.

The resultant liquid polyphenylene ether was subjected to various measurements by the previously described methods. The analysis results are shown in Table 1.

### (Synthesis of polyphenylene ether 6 (PPE-6))

A polyphenylene ether in a dry state was obtained in the same way as in Production Example 6 with the exception that 80.0 g of 2,6-dimethylphenol was used.

The resultant polyphenylene ether was subjected to various measurements by the previously described methods. The analysis results are shown in Table 1.

### (Synthesis of polyphenylene ether 7 (PPE-7))

Poly(2,6-dimethyl-1,4-phenylene ether): Noryl^{®} (Noryl is a registered trademark in Japan, other countries, or both) SA120 (produced by Sabic), number-average molecular weight (Mn) = 2,350 g/mol

### (Synthesis of polyphenylene ether 8 (PPE-8))

Poly(2,6-dimethyl-1,4-phenylene ether): Xyron^{®} (Xyron is a registered trademark in Japan, other countries, or both) S201A (produced by Asahi Kasei Corporation), number-average molecular weight (Mn) = 19,000 g/mol

### (Synthesis of polyphenylene ether 9 (PPE-9))

Poly(2,6-dimethyl-1,4-phenylene ether): Noryl^{®} SA90 (produced by Sabic), number-average molecular weight (Mn) = 1,800 g/mol

### (Synthesis of polyphenylene ether 10 (PPE-10))

1 kg of Noryl^{®} SA120 (PPE, produced by Sabic) was mixed with 3 kg of toluene at 60°C. The mixture was stirred until the PPE had completely dissolved. Next, 20 kg of methanol was added, and the mixture was stirred for 30 minutes to cause homogenization. This suspension was then cooled to room temperature, sediment was separated from the supernatant, and the solvent was removed. The collected product was a powder having an Mn of 950 g/mol.

### (Synthesis of polyphenylene ether 11 (PPE-11)

1 kg of Noryl^{®} SA90 (PPE, produced by Sabic) was mixed with 3 kg of toluene at 60°C. The mixture was stirred until the PPE had completely dissolved. Next, 42.8 kg of methanol was added, and the mixture was stirred for 30 minutes to cause homogenization. This suspension was then cooled to room temperature, sediment was separated from the supernatant, and the solvent was removed. The collected product was a powder having an Mn of 950 g/mol.

**[Table 1]**

| | Production Example 1 | Production Example 2 | Production Example 3 | Production Example 4 | Production Example 5 | Comparative Production Example 1 | Comparative Production Example 2 | Comparative Production Example 3 | Comparative Production Example 4 | Comparative Production Example 5 | Comparative Production Example 6 |
|---|---|---|---|---|---|---|---|---|---|---|---|
| | PPE-1 | PPE-2 | PPE-3 | PPE-4 | PPE-5 | PPE-6 | PPE-7 | PPE-8 | PPE-9 | PPE-10 | PPE-11 |
| Formula (1) content (mol%) | 100 | 80 | 0 | 70 | 40 | 0 | - | - | - | - | - |
| Formula (2) content (mol%) | 0 | 20 | 83 | 30 | 60 | 100 | | | | | |
| 4,6-Bis(octylthiomethyl)-o-cresol content (mol%) | 0 | 0 | 17 | 0 | 0 | 0 | | | | | |
| Tg (°C) | -80 | -43 | -50 | -35 | -5 | 202 | 160 | 214 | 140 | 175 | 155 |
| Weight-average molecular weight (Mw) | 2200 | 5700 | 1600 | 8000 | 10700 | 16000 | 6300 | 49000 | 4200 | 1500 | 1600 |
| Number-average molecular weight (Mn) | 1400 | 2300 | 700 | 2700 | 2900 | 5800 | 2350 | 19000 | 1800 | 950 | 950 |
| Viscosity at 80°C | O | O | O | O | Δ | × | × | × | × | × | × |

### [Examples 1 to 16 and Comparative Examples 1 to 7]

In accordance with the contents of formulations shown below in Table 2, components were mixed using the materials and method described below to prepare samples of rubber compositions. For components other than a polyphenylene ether (A), a uniform formulation composition was adopted as indicated below.

In kneading of components forming each rubber composition, a sealed kneader (internal volume 0.5 L) including a temperature controller was used to perform kneading of materials other than sulfur and a vulcanization accelerator under conditions of a filling rate of 65% and a rotor speed of 50 rpm to 90 rpm as a first stage of kneading. In this kneading, the temperature of the sealed mixer was controlled such as to obtain a compounded material with a discharge temperature of 150°C to 160°C.

Next, the obtained compounded material was cooled to room temperature and was kneaded once again to improve dispersion of a reinforcing filler as a second stage of kneading. In this kneading too, the discharge temperature of the compounded material was adjusted to 150°C to 160°C through temperature control of the mixer.

After cooling, a vulcanization accelerator and sulfur were further added and kneaded in an open roll mill set to 70°C as a third stage of kneading to yield an unvulcanized rubber composition.

Thereafter, the unvulcanized rubber composition was shaped and then vulcanized at 160°C with a specific vulcanization time and vulcanization pressure to yield a vulcanized rubber composition. The vulcanization time was set as a time determined by adding 5 minutes to the 90% vulcanization time of the unvulcanized rubber composition.

### (Polyphenylene ether (A))

PPE-1 to PPE-9 indicated in Table 1 that were obtained as described above were used. The type and amount thereof that was mixed into the rubber composition was varied.

### (Diene elastomer (B))

- Styrene-butadiene rubber (SBR (HS265 produced by Asahi Kasei Corporation)): 70 parts by mass
- Butadiene rubber (BR (U150 (product name) produced by Ube Industries, Ltd.)): 30 parts by mass

### (Other components)

- Silica (Ultrasil 7000GR (product name) produced by Evonik Degussa Corporation; nitrogen adsorption specific surface area: 170 m²/g): 5 parts by mass, 15.0 parts by mass, 50.0 parts by mass, 75.0 parts by mass, 100.0 parts by mass, 120.0 parts by mass
- Silane coupling agent (Si75 produced by Evonik Degussa Corporation; bis(triethoxysilylpropyl)disulfide): 6.0 parts by mass
- Carbon black (SEAST KH(N339) produced by Tokai Carbon Co., Ltd.): 5.0 parts by mass
- Softener (TDAE oil (V500 (product name) produced by H&R Group): 32 parts by mass
- Zinc oxide: 2.5 parts by mass
- Stearic acid: 2.0 parts by mass
- Wax, SUNNOC: 1.5 parts by mass
- Age resistor (N-(1,3-dimethylbutyl)-N'-phenyl-p-phenylenediamine): 2.0 parts by mass
- Sulfur: 2.2 parts by mass
- Vulcanization accelerator 1 (N-cyclohexyl-2-benzothiazylsulfinamide): 1.7 parts by mass
- Vulcanization accelerator 2 (diphenylguanidine): 2.0 parts by mass

### <Evaluation>

A rubber composition and vulcanized rubber composition of each obtained sample were subjected to the following evaluations. The evaluation results are shown in Table 2.

### (1) Hardness

A durometer type A value was measured in accordance with JIS K6253 for a sample of a vulcanized rubber composition obtained in each example or comparative example.

### (2) Tensile strength and elongation at break

The tensile strength and elongation at break were measured in accordance with a tensile test method of JIS K6251 for a sample of a vulcanized rubber composition obtained in each example or comparative example.

### (3) Processability (Mooney viscosity (ML viscosity) of rubber composition)

A sample of an unvulcanized rubber composition obtained as described above was taken as a sample. A Mooney viscometer (VR1132 (product name) produced by Ueshima Seisakusho Co., Ltd.) was used to perform 1 minute of preheating at 130°C and then measure the viscosity after four minutes of rotation of the rotor at 2 rpm in accordance with ISO 289. A judgment was made by the following index.
O: ML viscosity of less than 100
Δ: ML viscosity of not less than 100 and less than 150
×: ML viscosity of 150 or more

### (4) High fuel efficiency (tan δ at 50°C)

For a sample of a vulcanized rubber composition obtained in each example or comparative example, tan δ measured in torsional mode at 50°C with a frequency of 10 Hz and a strain of 3% using a viscoelasticity testing machine "ARES" produced by Rheometric Scientific was taken to be an index of high fuel efficiency. Note that the value of tan δ was judged by the following index and that a smaller value indicates better high fuel efficiency.
O: tan δ at 50°C of less than 0.120
Δ: tan δ at 50°C of not less than 0.120 and less than 0.130
×: tan δ at 50°C of 0.130 or more

### (5) Wet gripping performance (tan δ at 0°C)

For a sample of a vulcanized rubber composition obtained in each example or comparative example, tan δ measured in torsional mode at 0°C with a frequency of 10 Hz and a strain of 1% using a viscoelasticity testing machine "ARES" produced by Rheometric Scientific was taken to be an index of wet gripping performance. Note that the value of tan δ was judged by the following index and that a larger value indicates better wet gripping performance.
O: tan δ at 0°C of 0.180 or more
Δ: tan δ at 0°C of not less than 0.170 and less than 0.180
×: tan δ at 0°C of less than 0.170

### (6) Ice gripping performance (tan δ at -20°C)

For a sample of a vulcanized rubber composition obtained in each example or comparative example, tan δ measured in torsional mode at -20°C with a frequency of 10 Hz and a strain of 1% using a viscoelasticity testing machine "ARES" produced by Rheometric Scientific was taken to be an index of ice gripping performance. Note that the value of tan δ was judged by the following index and that a larger value indicates better ice gripping performance.
O: tan δ at -20°C of 0.302 or more
Δ: tan δ at -20°C of not less than 0.275 and less than 0.302
×: tan δ at -20°C of less than 0.275

### (7) Vulcanization rate

For a rubber composition obtained as described above, a vulcanization curve with obtained torque on a vertical axis and vulcanization time on a horizontal axis was measured in accordance with "Determination of cure characteristics with oscillating curemeters" of JIS K6300-2 at a temperature of 160°C using a rotorless curemeter as a rheometer. On the obtained vulcanization curve, the vulcanization time taken from the start of vulcanization until the torque reached a maximum value MH was taken to be tc(max). Based on the stipulations in JIS K6300-2, the difference between the minimum value ML and the maximum value MH of the torque was set as ME (ME = MH - ML), the vulcanization time until the torque reached ML + 90%ME from the start of the test was taken to be T90 (units: min), and this was measured as the vulcanization rate.

### (8) Performance balance

The performance balance of a sample of a vulcanized rubber composition obtained in each example or comparative example was judged by the following index in consideration of the high fuel efficiency (tan δ at 50°C), wet gripping performance (tan δ at 0°C), and ice gripping performance (tan δ at -20°C) of the sample described above.
O: Each of fuel efficiency, wet gripping performance, and ice gripping performance judged to be "O"
Δ: Any one of fuel efficiency, wet gripping performance, and ice gripping performance judged to be "Δ"
×: Any one of fuel efficiency, wet gripping performance, and ice gripping performance judged to be "×"

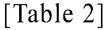

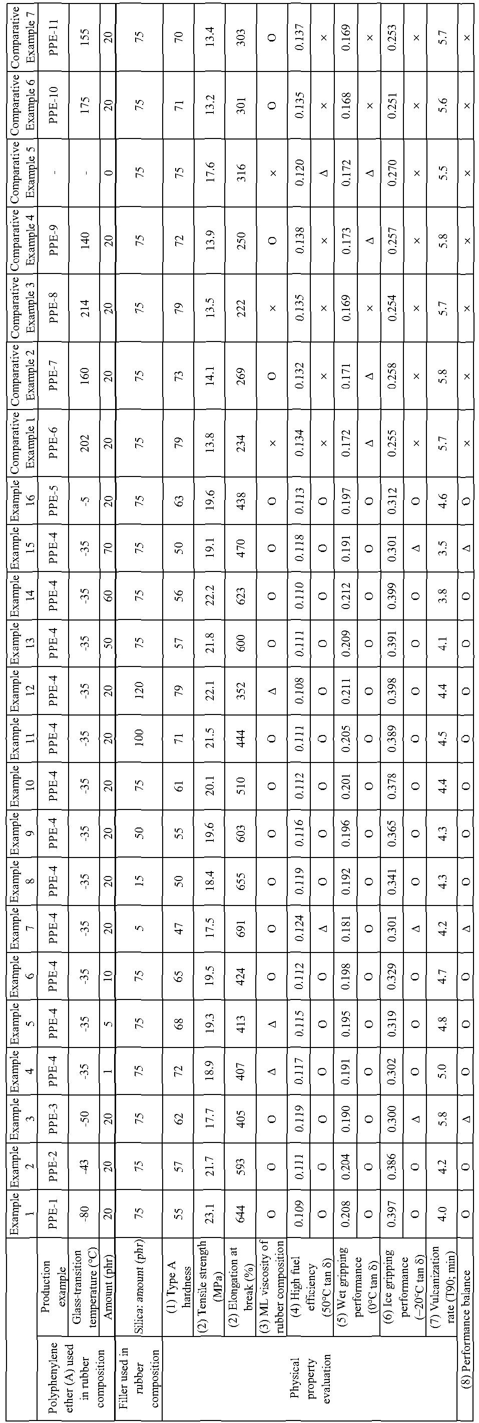

It can be seen from Table 2 that in Examples 1 to 16, hardness, tensile strength, elongation at break, processability, high fuel efficiency, wet gripping performance, ice gripping performance, and vulcanization rate are excellent, and the balance of these characteristics is also good.

It can also be seen that in Comparative Examples 1 to 7, at least one of hardness, tensile strength, elongation at break, processability, high fuel efficiency, wet gripping performance, ice gripping performance, and vulcanization rate, or the balance thereof, is poor compared to in the examples.

### INDUSTRIAL APPLICABILITY

The rubber composition of the present embodiment has industrial applicability as a constituent material of a tire such as a truck tire, a bus tire, an automobile tire, a motorcycle tire, an off-road tire, or an aircraft tire; a material of a constituent element of a tire such as a tread, a sidewall, a chafer strip, a tire rubber layer, a reinforcing cord coating material, or a cushion layer; an industrial component such as a fiber, a thin film, a laminate, an automobile component, or a medical component; a shaped product such as a device housing, a consumer product, or packaging; or a material of a shaped rubber component such as a tire curing bladder, an inner tube, an air sleeve, a hose, a belt such as a conveyor belt or an automobile belt, a solid tire, a tire for retreading, a constituent element of footwear, a roller for graphic art applications, an antivibration device, a pharmaceutical production device, an adhesive, a caulking material, a sealing material, a glazing compound, a protective coating, an air cushion, an air spring, air bellows, an accumulator bag, a material of any of various types of bladders used in liquid storage and curing methods, an automobile suspension bumper, an automobile exhaust pipe hanger, or a body mount.

## Claims

1. A rubber composition comprising:
a polyphenylene ether (A) having a glass-transition temperature of not lower than -100°C and lower than 0°C as measured by differential scanning calorimetry (DSC); and
a diene elastomer (B).

2. The rubber composition according to claim 1, wherein
the polyphenylene ether (A) includes a repeating unit derived from a phenol of formula (1), shown below, and a repeating unit derived from a phenol of formula (2), shown below, and
a content ratio of the repeating unit derived from the phenol of formula (1) is not less than 31 mol% and less than 100 mol% and a content ratio of the repeating unit derived from the phenol of formula (2) is more than 0 mol% and not more than 69 mol% relative to 100 mol%, in total, of the repeating units of formula (1) and formula (2), 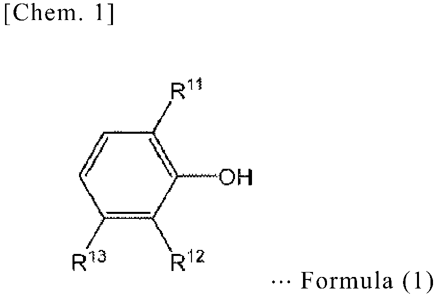 given that in formula (1), R¹³ is an optionally substituted saturated or unsaturated hydrocarbon group having a carbon number of 15, and R¹¹ and R¹² are each independently a hydrogen atom, a linear saturated hydrocarbon group having a carbon number of 1 to 12, or a substituent represented by formula (3), shown below, 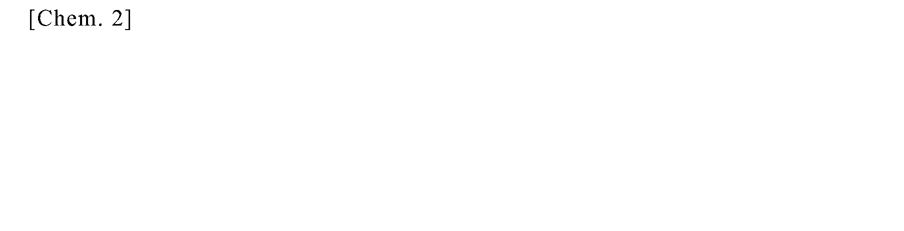 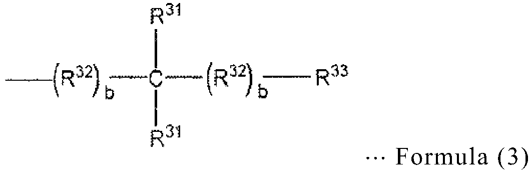 in formula (3), each R³¹ is independently an optionally substituted linear alkyl group having a carbon number of 1 to 8, or atoms in two R³¹ groups are bonded to each other to form a cycloalkyl group having a carbon number of 1 to 8, each R³² is independently an optionally substituted alkylene group having a carbon number of 1 to 8, each b is independently 0 or 1, and R³³ is a hydrogen atom, an optionally substituted alkyl group having a carbon number of 1 to 8, or an optionally substituted phenyl group, 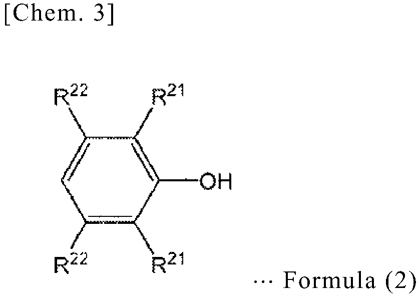 and in formula (2), each R²¹ is independently an optionally substituted saturated hydrocarbon group having a carbon number of 1 to 6, an optionally substituted aryl group having a carbon number of 6 to 12, or a halogen atom, and each R²² is independently a hydrogen atom, an optionally substituted hydrocarbon group having a carbon number of 1 to 6, an optionally substituted aryl group having a carbon number of 6 to 12, or a halogen atom.

3. The rubber composition according to claim 1 or 2, wherein the polyphenylene ether (A) has a viscosity at 80°C of less than 1,000,000 cP.

4. The rubber composition according to claim 1 or 2, wherein the polyphenylene ether (A) has a number-average molecular weight of less than 5,500.

5. The rubber composition according to claim 1 or 2, wherein the polyphenylene ether (A) includes a biomass-derived monomer.

6. The rubber composition according to claim 1 or 2, wherein the biomass-derived monomer is CNSL.

7. The rubber composition according to claim 1 or 2, wherein the rubber composition comprises 0.01 parts by mass to 65 parts by mass of the polyphenylene ether (A) relative to 100 parts by mass of the diene elastomer (B).

8. The rubber composition according to claim 1 or 2, wherein the rubber composition comprises 10 parts by mass to 115 parts by mass of silica relative to 100 parts by mass of the diene elastomer (B).

9. A method of using a polyphenylene ether comprising using a polyphenylene ether having a glass-transition temperature of not lower than -100°C and lower than 0°C as measured by differential scanning calorimetry (DSC) as a raw material of a composition for a tire.

10. A method of producing vulcanized rubber comprising:
a step of mixing a diene elastomer (B) and a polyphenylene ether (A) having a glass-transition temperature of not lower than -100°C and lower than 0°C as measured by differential scanning calorimetry (DSC) to obtain a rubber composition; and
a step of vulcanizing the rubber composition, wherein
the polyphenylene ether (A) has an unsaturated hydrocarbon group in a side chain, and
the diene elastomer (B) and the polyphenylene ether (A) undergo a crosslinking reaction.
